# EUROPÄISCHE PATENTSCHRIFT

(11) **EP 2 367 128 B1**
(45) Veröffentlichungstag und Bekanntmachung des Hinweises auf die Patenterteilung: **14.10.2015**
(21) Anmeldenummer: 10002767.1
(22) Anmeldetag: 16.03.2010
(51) Int. Cl.: G06F 21/64, H04L 9/32, G06F 21/32

(54) **Verfahren und Vorrichtung zur elektronischen Signatur**
Device and method for electronic signatures
Procédé et dispositif de signature électronique

(43) Veröffentlichungstag der Anmeldung: 21.09.2011
(73) Patentinhaber: Stepover GmbH, 70329 Stuttgart (DE)
(72) Erfinder: Günther, Andreas, 73728 Esslingen (DE)
(74) Vertreter: Kramer Barske Schmidtchen Patentanwälte PartG mbB

(56) Entgegenhaltungen:
- EP-A1- 1 944 716
- EP-A2- 0 440 914
- WO-A1-00/07330
- WO-A1-01/08352
- DE-A1- 10 112 177
- US-A1- 2008 010 218
- US-B1- 7 024 562

## Beschreibung

### Technisches Gebiet

Die vorliegende Erfindung betrifft allgemein Verfahren und Vorrichtungen zur elektronischen Signatur. Insbesondere betrifft die vorliegende Erfindung solche Signaturverfahren und Signaturerstellungseinheiten zur elektronischen Signatur, bei denen anstatt oder zusätzlich zu biometrischen Merkmalen bzw. hierauf basierende biometrische Daten einer handschriftlichen Unterschrift weitere biometrische Merkmale bzw. hierauf basierende biometrische Daten eines Unterzeichners benutzt werden.

Die vorliegende Erfindung betrifft zudem Computersysteme zur elektronischen Signatur, die eine datenverarbeitende Vorrichtung und eine hiermit bidirektional kommunizierbare Signaturerstellungseinheit umfassen. Die Signaturerstellungseinheit ist dabei von der datenverarbeitenden Vorrichtung räumlich getrennt und als separate Einheit ausgebildet, die möglicherw51eise eine relativ kleine Anzeigeeinrichtung und Signaturerfassungseinrichtung aufweist.

### Hintergrund

Einleitend ist anzumerken, dass eine Vorrichtung zur Erfassung wenigstens eines biometrischen Merkmals im Folgenden als Signaturerstellungseinheit bezeichnet werden kann. Eine solche Signaturerstellungseinheit kann z.B. eine oder mehrere technische Einrichtungen zur Erfassung wenigstens eines biometrisches Merkmals einer natürlichen Person aufweisen, die einen elektronischen Datensatz elektronisch zu signieren hat.

Elektronische Datensätze im Sinne der vorliegenden Erfindung können irgendwelche elektronischen Dokumente sein, wie z.B. PDF-Dateien, Word-Dateien, XML-Dateien oder andere mittels bekannter Programme verarbeitbare Dateien oder Daten in einer Datenbank.

Der hierin verwendete Begriff "Übertragung" bezeichnet grundsätzlich jedwede Art von Übergabe oder Versendung von Informationen von einer Vorrichtung an eine andere Vorrichtung. Die Übertragung kann dabei sowohl durch aktives Senden (z.B. via bluetooth oder W-Lan) als auch durch Bereitstellen und Abholen (z.B. Mass-Storage Protokoll oder NAS) erfolgen. Das hierbei verwendete Protokoll (z.B. TCP-IP, HID oder Proprietär) spielt dabei ebenso wenig eine Rolle wie die sich dadurch ergebende Art der Informationsaufteilung bei der Übertragung, z.B. Zerlegung in Pakete bestimmter Größen (wie z.B. bei HID oder TCP-IP), oder Übertragung am Stück, z.B. als zusammenhängender Datenstrom wie bei Verwendung einer seriellen Schnittstelle, Mass-Storage Devices oder möglicherweise Proprietären Protokollen). Auch das Übertragungsmedium (z.B. Kabel, Funkwellen, Infrarot, Lichtleiter etc.) bleibt von dieser Definition unberührt.

Der hierin verwendete Begriff "Darstellungsbereich" bezeichnet grundsätzlich irgendeine Art von technischer Einrichtung zur zwei- oder dreidimensionalen Darstellung elektronischer Daten, z.B. ein LCD-Display, TFT-Display, E-Paper-Display, OLED-Display, eine Projektionsfläche etc. Insbesondere ist hierunter eine an sich bekannte grafische, ein- oder mehrfarbige, Visualisierungseinrichtung zu verstehen.

Die biometrischen Merkmale können mittels geeigneter Einrichtungen erfasst werden, wie z.B. eine Kamera zur Erfassung beispielsweise der Iris, eines Fingerabdrucks. Andere geeignete technische Einrichtungen können beispielsweise sein: kapazitiver oder restitiver Touch, Wiegezellen oder aktiver Stift mit Positionsbestimmungseinrichtungen zur Erfassung der biometrischen Daten einer Unterschrift (wie z.B. bei einem handelsüblichen Grafik-Tablet oder Tablet-PC), ein Mikrofon zur Erfassung des Stimmmusters etc.. Darüber hinaus mag eine Signaturerstellungseinheit noch entsprechende Signalverarbeitungseinrichtungen (z.B. Chips, Prozessoren, Speicher etc.) aufweisen, um z.B. Verschlüsselungsoperationen durchführen zu können. In Folge der Erfassung dieser biometrischen Merkmale werden entsprechende elektronische biometrische Daten erzeugt.

In den vorangegangenen Jahren wurden viele Gesetz und Regelungen zur elektronischen Unterzeichnung elektronischer Datensätze verabschiedet, sogenannte elektronische Signaturen. Elektronische Signaturen können sogenannte digitale Signaturen sein, bei denen beispielsweise ein asymmetrisches Schlüsselpaar, das aus einen geheimen privaten Schlüssel (auch Private Key genannt) und einem zugehörigen öffentlichen Schlüssel (auch Public Key genannt) besteht, zum Einsatz kommen; siehe z.B. bekannte asymmetrische Verschlüsselungsverfahren wie PGP oder RSA).

Ein Vorteil dieser asymmetrischen Verschlüsselungsverfahren mag darin bestehen, dass Daten, die mit einem der asymmetrischen Schlüssel verschlüsselt bzw. signiert wurden, nicht mit demselben Schlüssel entschlüsselt werden können. Stattdessen muss der jeweils korrespondierende, andere asymmetrische Schlüssel des gleichen Schlüsselpaares verwendet werden. Wurde eine Prüfsumme mit einem Private Key verschlüsselt, muss zu deren Entschlüsselung, der zugehörige Public Key verwendet werden. Nur dann kann die Prüfsumme später überprüft werden.

Ein Nachteil dieser digitalen Signaturen kann darin bestehen, dass der Inhaber im Besitz eines Private Key sein muss, welcher (z.B. durch einen Zertifikatsanbieter) mit seiner Person verknüpft ist. Ein Empfänger kann dann das unterzeichnete Dokument anhand des öffentlichen Schlüssels, der mit dem privaten Schlüssel des Absender korrespondiert, prüfen und auf die Person des Unterzeichners zurückführen.

Eine zusätzliche oder alternative Maßnahme zur Verwendung solcher Personen bezogener asymmetrischer Schlüssel zur Unterzeichnung kann die Verwendung von biometrischen Merkmalen bzw. hierauf basierenden elektronischen biometrischen Daten sein. Solche biometrischen Daten können z. B. sein: digitalisierte Unterschrift mit Bild und ggf. Druck und Zeitverlauf, digitalisierter Irisscan, digitalisierte Handgeometriedaten, digitalisierter Fingerabdruck, digitalisiertes Stimmmuster etc. Alle diese biometrischen Daten können dem Unterzeichner als Bestandteil der elektronischen Signatur zugeordnet werden. Diese biometrischen Daten dienen dann anstelle der Zuordnung des Schlüsselpaares zum Unterzeichner als Identifikationsmerkmal des Unterzeichners.

Es sind bereits verschiedenen Verfahren zur Verknüpfung von biometrischen Daten mit elektronischen Datensätzen bekannt, welche sowohl die Verschlüsselung der biometrischen Daten als auch deren Verknüpfung mit einem elektronischen Datensatz beinhalten (siehe z.B. DE 11 2005 003 281 T5, EP 1 944 716 A1, US 5,297,202 und US 5,195,133).

Bei Verfahren mit wenigen Verschlüsselungsschritten werden die biometrischen Daten nur mit dem elektronischen Datensatz bzw. einer Prüfsumme (z.B. einem Hash wie z.B. SHA-1, SHA-2, Tiger, SHA-256 etc. über den elektronischen Datensatz bzw. dessen darstellungsrelevanten Inhalt) verknüpft. Die Prüfsumme mag hierbei lediglich über den elektronischen Datensatz gebildet sein. Daher besteht möglicherweise keine sichere Kontrollmöglichkeit, ob die verschlüsselten biometrischen Daten selbst nach deren Verknüpfung mit dem elektrischen Datensatz manipuliert bzw. verändert oder beschädigt wurden. Des Weiteren kann u.U. der Nachteil bestehen, dass eine Integritätsprüfung des Dokuments stets mit der Entschlüsselung der biometrischen Daten einhergeht. Entschlüsselte biometrische Daten können jedoch losgelöst von dem elektronischen Datensatz, der ursprünglich elektronisch unterzeichnet wurde, als Blanko-Unterschrift für andere elektronische Dokumente missbraucht werden, da die Verknüpfung, d.h. eine Bindung der

Die EP 0 440 914 A2 offenbart ein Verfahren zum Zuordnen von Nutzdaten zu einem bestimmten Absender. Ein Hash-Ergebnis der Nutzdaten wird zu einem mehrfach gesicherten zentralen Server übertragen, in welchem es mittels eines Kryptoalgorithmus in Verbindung mit einem privaten Schlüssel des Absenders zu einer Signatur transformiert wird.

Die WO 00/07330 A1 offenbart ein Verfahren zum Bilden eines digitalen Zertifikats zur Authentifizierung eines Benutzers. Das digitale Zertifikat wird zur Authentifizierung von elektronisch übermittelten Dokumenten verwendet und basiert auf biologischen Merkmalen des Benutzers.

Die DE 11 2005 003 281 T5 offenbart ein Verfahren zum Erfassen und Sichern von elektronischen Signaturen durch einen Hash-Codierungsalgorithmus. Eine in einer Vorrichtung erfasste Signatur wird dabei mit einer Hash-Codierung von zugehörigen Transaktionsdaten verschlüsselt.

Die EP 1 944 716 A1 offenbart ein Verfahren zum Sichern eines Dokuments mit eingefügtem Signaturabbild in einem Computersystem. Ein digitales Signaturabbild wird in ein zu signierendes elektronisches Dokument eingefügt. Es wird eine erste Prüfsumme über das elektronische Dokument mit dem eingefügten Signaturabbild mit Hilfe einer vorbestimmten ersten Hash-Funktion gebildet, und es wird eine zweite Prüfsumme über das elektronische Dokument mit dem eingefügten Signaturabbild mit Hilfe einer vorbestimmten zweiten Hash-Funktion gebildet. Ferner wird ein Zufallswert erzeugt, und die erste Prüfsumme wird mit der Summe aus der zweiten Prüfsumme und dem erzeugten Zufallswert verschlüsselt. Die verschlüsselte erste Prüfsumme wird an das Dokument angehängt, und der erzeugte Zufallswert wird mit einem öffentlichen Schlüssel eines ersten Schlüsselpaars asymmetrisch verschlüsselt. Der asymmetrisch verschlüsselte Zufallswert wird an das Dokument angefügt.

Die US 5,195,133 und die US 5,297,202 offenbaren jeweils ein Verfahren zum Erzeugen eines Bezahldokuments in Form eines Bilds. Das Dokument wird von einem Kunden signiert, und eine Kopie der Signatur wird in digitaler Form erfasst. Die Signatur wird verschlüsselt und zusammen mit einer digitalen Aufzeichnung der Transaktion gespeichert.

Diese Verfahren können aber möglicherweise einen der folgenden Nachteile haben. biometrischen Daten an den elektronischen Datensatz, nur durch deren Verschlüsselung sichergestellt ist.

Andere Verfahren, wie sie z.B. in der bereits genannten EP 1 944 716 A1 offenbart sind, sehen die Verwendung mehrer Prüfsummen und die Verwendung zweier asymmetrischer Schlüsselpaare vor, um zum einen die Verbindung der biometrischen Daten mit dem elektronischen Datensatz zu gewährleisten und zum anderen - mittels einer zweiten Prüfsumme - auch die Unversehrtheit der biometrischen Daten sicher zu stellen.

Bei ersteren Verfahren kann erst bei der Entschlüsselung und Prüfung der biometrischen Daten nachvollzogen werden, ob die biometrischen Daten unversehrt sind. Die zweite Art von Verfahren benötigt eine relativ hohe Rechenleistung zur Durchführung der mehrfachen Verschlüsselung der mehreren Prüfsummen, zumeist unter Zuhilfenahme mehrere asymmetrischer Schlüsselpaare. Und daher bietet sich diese Art von Verfahren derzeit zumeist nur zur Verwendung auf einem voll ausgestatteten Computer, d.h. einer datenverarbeitenden Einrichtung, an. Ein Computer gilt jedoch als unsichere Umgebung, da dort hinterlegte Schlüssel ggf. ausgelesen werden könnten und/oder der Vorgang an sich z.B. durch Trojaner oder Hacker beeinflusst werden könnte. Zudem steht bei diesen mehrstufigen Verfahren oft die Frage im Raum, ob eine zweite Prüfsumme, die das elektronische Dokument und die enthaltenen biometrischen Daten beschreibt, wirklich zu dem Originaldokument gehört, da der zur Verschlüsselung verwendete Schlüssel wie z.B. ein Private Key ein anderer ist bzw. zu einem zweiten asymmetrischen Schlüsselpaar gehört, als der zur Sicherung der biometrischen Daten sowie deren Verknüpfung mit einer ersten Prüfsumme verwendete Schlüssel. Hierdurch kann ein relativ komplexer logistischer Aufwand in der Zuordnung der Schlüsselpaare zueinander bzw. zum verwendeten Signaturgerät bzw. Computer entstehen. Dies kann ein Verfahren komplex und sehr erklärungsbedürftig machen.

Allen Verfahren kann gemein sein, dass die erste Prüfsumme nur die Integrität des elektronischen Datensatzes sichert. Gerade diese, direkt mit den verschlüsselten biometrischen Daten und deren Erfassungsvorgang verbundene Prüfsumme, sollte jedoch auch die Integrität der verschlüsselten biometrischen Daten absichern, da nur diese unabstreitbar mit dem Erfassungsvorgang in Verbindung zu bringen sind. Diese erste Prüfsumme ist daher der einzig unabstreitbare Nachweis für die Integrität und Zusammengehörigkeit des elektronischen Datensatzes und des Identifikationsmerkmals bzw. der Einwilligung des Unterzeichners - anhand der verschlüsselten biometrischen Daten.

Eine zweite Prüfsumme kann die Integrität zwar ebenfalls wahren, da diese nach den bekannten Verfahren jedoch nicht sicher mit den biometrischen Daten verknüpft ist, wahrt die zweite Prüfsumme möglicherweise nicht die Zugehörigkeit, d.h. die zweite Prüfsumme kann vielleicht nur sicherstellen, dass die von mit gesicherten verschlüsselten biometrischen Daten nach ihrer Bildung unverändert sind. Die zweite Prüfsumme lässt jedoch möglicherweise keine sichere Aussage darüber zu, ob diese verschlüsselten biometrischen Merkmale auch wirklich zur Unterzeichnung dieses elektronischen Datensatzes erfasst wurden.

Alle bisherigen Verfahren können zudem mit dem Problem behaftet sein, dass diese in einer Umgebung, in welcher nicht nur elektronisch signiert wird, sondern auch der Unterzeichner automatisiert identifiziert werden soll, die biometrischen Merkmale zumindest zur Identifikation an eine Verifikations-Engine (zumeist eine Software auf einem Computer oder Server) übertragen werden müssen ohne eine Verknüpfung mit dem elektronischen Datensatz zu besitzen. Genau an dieser Stelle könnten die biometrischen Merkmale bzw. deren entsprechenden elektronischen Daten, jedoch abgefangen bzw. kopiert werden und somit ggf. anderweitig missbräuchlich verwendet werden.

Als Alternative hierzu besteht bisher lediglich die Möglichkeit, die gesamte Verifikation, d.h. den Vergleich der biometrischen Merkmale mit Referenzmustern, in die Signaturerstellungseinheit zu verlagern, mit der die biometrischen Merkmale erfasst werden. Einer solchen Vorgehensweise steht in der Praxis jedoch die dafür benötigte Rechenleistung entgegen und auch die Übertragung der Referenzmuster in die Signaturerstellungseinheit bzw. deren sichere Verteilung an alle in Frage kommenden Signaturerstellungseinheiten. So kann man z.B. in einer Bank nicht davon ausgehen, das der zu verifizierende Kunde immer die selbe Filiale oder gar dieselbe Signaturerstellungseinheit aufsucht.

Ein Hauptaugenmerk mag zudem auf der Effizienz des Verfahrens liegen, sodass dieses nicht auf einem leistungsstarken, aber unsicheren Computer ausgeführt werden muss, sondern in weiten Teilen in einem sicheren, aber zumeist Rechenleistung schwachen Gerät, welches gleichzeitig zur Erfassung der biometrischen Daten dient.

Ein der vorliegenden Erfindung zugrunde liegendes technisches Problem mag darin bestehen, eines oder mehrere der genannten Probleme zu beseitigen oder zumindest etwas besser zu lösen.

### Darstellung der Erfindung

Gemäß einem ersten Aspekt der vorliegenden Erfindung wird ein Verfahren zur elektronischen Signatur offenbart, bei dem eine Signaturerstellungseinheit mit einem von außerhalb der Signaturerstellungseinheit nicht auslesbaren Speicher bereitgestellt wird. In dem nicht auslesbaren Speicher ist ein erster Schlüssel abgespeichert. Die Signaturerstellungseinheit ist dazu ausgebildet, eine bidirektionale Datenkommunikation mit einer separaten, datenverarbeitenden Vorrichtung zu führen und ein Verschlüsselungsverfahren unter Verwendung des in der Signaturerstellungseinheit abgespeicherten Schlüssels durchzuführen. Es wird ferner eine von der Signaturerstellungseinheit räumlich getrennte, datenverarbeitende Vorrichtung bereit gestellt, die dazu ausgebildet ist, eine bidirektionale Datenkommunikation mit der Signaturerstellungseinheit zu führen und einen mittels der Signaturerstellungseinheit zu unterzeichnenden elektronischen Datensatz bereit zu stellen. Erfindungsgemäß wird wenigstens ein biometrisches Merkmal einer natürlichen Person, die den elektronischen Datensatz elektronisch zu unterzeichnen hat, mittels der Signaturerstellungseinheit erfasst. Dieses wenigstens eine biometrische Merkmal kann ein Unterschriftsmerkmal wie z.B. der Druckverlauf etc. sein, und/oder ein biometrisches Merkmal der Person selbst, wie z.B. Irismuster, etc. Aus dem wenigstens einen erfassten biometrischen Merkmal wird ein elektronischer biometrischer Datensatz in der Signaturerstellungseinheit erzeugt. Es wird ferner ein Signaturerfassungsvorgang-Zufallswert in der Signaturerstellungseinheit erzeugt. Unter Verwendung des erzeugten Signaturerfassungsvorgang-Zufallswertes wird der erzeugte biometrische Datensatzes in der Signaturerstellungseinheit verschlüsselt.

Gemäß einer ersten Alternative werden die gemäß voranstehender Beschreibung verschlüsselten biometrischen Daten an die datenverarbeitende Vorrichtung übertragen. In der datenverarbeitenden Vorrichtung wird eine erste Prüfsumme über die verschlüsselten biometrischen Daten und den elektronischen Datensatz gebildet und die gebildete erste Prüfsumme von der datenverarbeitenden Vorrichtung an die Signaturerstellungseinheit übertragen. Eine alternative Vorgehensweise sieht vor, dass der elektronische Datensatz von der datenverarbeitenden Vorrichtung an die Signaturerstellungseinheit übertragen wird und dort die erste Prüfsumme über die verschlüsselten biometrischen Daten und den elektronischen Datensatz gebildet wird.

Beiden Alternativen ist gemein, dass der erzeugte Signaturerfassungsvorgang-Zufallswert in der Signaturerstellungseinheit unter Verwendung der ersten Prüfsumme verschlüsselt wird und dann dieses Ergebnis der Verschlüsselung unter Verwendung des in der Signaturerstellungseinheit gespeicherten ersten Schlüssels verschlüsselt wird. Das Ergebnis der letzten Verschlüsselung wird dann an die datenverarbeitende Vorrichtung übertragen.

Ein erfindungsgemäßes elektronisches Signaturverfahren kann biometrischen Daten einer handschriftlichen Unterschrift und/oder weitere biometrische Daten eines Unterzeichners in sicherer Weise mit dem zu signierenden elektronischen Datensatz verknüpfen. Es mag durch die Verknüpfung der biometrischen Daten des Unterzeichners mit dem zu signierenden elektronischen Datensatz auch gewährleisten, dass sowohl eine nachträgliche Änderung des elektronischen Datensatzes als auch eine nachträgliche Änderung der dazu gehörenden biometrischen Daten erkennbar wird. Zudem können die biometrischen Daten zur automatisierten Personenidentifikation nicht in einer Art und Weise vorliegen, in der die biometrischen Daten selbst nicht für sich vollumfänglich unverschlüsselt sind; die biometrischen Daten können beispielsweise nur mit dem zugehörigen elektronischen Datensatz verknüpft vorliegen. Trotz der Verwendung des wenigstens einen biometrischen Merkmals zur Personenidentifikation mag erfindungsgemäß es ermöglichen sein, dass mit den gleichen biometrischen Daten ein elektronisches Dokument sicher unterzeichnet wird.

Erfindungsgemäß kann möglicherweise ein einfaches, verständliches, sicheres, effizientes und möglichst wenig Rechenleistung benötigendes Verfahren bereit gestellt werden, das auch mit einem kleinen "leistungsschwachen" Prozessor in einer externen Signaturerstellungseinheit arbeiten kann. Ein solcher Prozessor in einer externen Signaturerstellungseinheit mag schwerer manipulierbar sein als eine Software auf einem Computer. Dadurch kann u.U. auch die verwendete wenigstens eine Prüfsumme nicht nur die Integrität des elektronischen Datensatzes sondern auch die Integrität der verschlüsselten biometrischen Daten gewährleistet sein. So kann die Anzahl der benötigten Verschlüsselungsschritte und die Anzahl der benötigten Prüfsummen reduziert sein. Insbesondere eine bisher eingesetzte asymmetrische Verschlüsselung kann relativ viel Rechenleistung erfordern.

So kann die Verwendung einer oder maximal zweier Prüfsummen und die möglichst seltene Verwendung eines asymmetrischen Schlüssels pro elektronischer Signatur ausreichend sein. Die verwendeten Prüfsummen sollten zudem auch die Integrität der verschlüsselten biometrischen Daten sichern; dies gilt vor allem für die direkt mit den biometrischen Daten verbundene Prüfsumme, da nur diese eindeutig mit dem Erfassungsvorgang in Verbindung zu bringen ist.

Grundsätzlich sollen die biometrischen Daten mit einer Prüfsumme verbunden sein, die sich sowohl auf den Inhalt des elektronischen Datensatzes bezieht als auch auf die verschlüsselten biometrischen Daten selbst. Diese Bedingung ist vielleicht bei den bereits erwähnten bekannten Verfahren nicht erfüllt, da die verwendete Prüfsumme vor der Verschlüsselung der biometrischen Daten bereits vorhanden sein muss, um die Prüfsumme mit den biometrischen Daten gemeinsam zu verschlüsseln bzw. um diese Prüfsumme oder den gesamten elektronischen Datensatz selbst zur Verschlüsselung zu verwenden. Die vorliegende Erfindung kann dieses Problem möglicherweise beheben, indem unter anderem ein gemeinsames, aber pro Signaturerfassungsvorgang einmaliges Passwort oder ein sicherer, pro Signaturerfassungsvorgang einmaliger Zufallswert wie z.B. eine zufällige Abfolge von Symbolen, die in der Signaturerstellungseinheit erzeugt wird und von außerhalb der Signaturerstellungseinheit nicht auslesbar ist, zur Verschlüsselung der biometrischen Daten und der Prüfsumme verwendet wird. Dieser Zufallswert oder Passwort mag auch gleichzeitig zur Verknüpfung der verschlüsselten biometrischen Daten mit der Prüfsumme dienen. Dadurch kann die Notwendigkeit der direkten Verknüpfung oder Kombination bzw. Verschlüsselung der Prüfsumme mit den biometrischen Daten entfallen. Somit können vielleicht beide Werte zeitlich versetzt verschlüsselt werden, d.h. die Prüfsumme kann auch erst nach der Verschlüsselung der biometrischen Daten gebildet werden und erfüllt somit die Anforderung die biometrischen Daten mit abzusichern, da die Prüfsumme nunmehr zu einem späteren Zeitpunkt, d.h. nach Vorliegen der verschlüsselten biometrischen Daten, gebildet werden mag. Über den gemeinsamen Schlüssel wie z.B. den Signaturerfassungsvorgang-Zufallswert ist die Zusammengehörigkeit von biometrischen Daten und Prüfsumme jedoch dennoch nachvollziehbar.

Bei der Verschlüsselung von Prüfsummen sollte zudem auch ein Augenmerk darauf gerichtet sein, ob tatsächlich die richtige Prüfsumme verschlüsselt wird bzw. der Unterzeichner auch tatsächlich für diesen elektronischen Datensatz eine Unterzeichnung leisten wollte. Daher kann es erfindungsgemäß vorteilhaft sein, optionale Verfahrensweisen bereit zu stellen, die es dem Unterzeichner ermöglichen, die Prüfsumme z.B. zwischen Computer und Signaturerstellungseinheit abzugleichen bzw. den zu unterzeichnenden elektronischen Datensatz selbst in der "sicheren" Signaturerstellungseinheit anzusehen.

Optional kann auch die Signaturerstellungseinheit als "sicheres" Eingabemedium verwendet werden, das bei gewissen Operationen eine Einwilligung des Unterzeichners einfordert und bei dessen Verweigerung die benötigte Operation einfach nicht durchführt und somit, unabhängig von einer möglichen Manipulation auf z.B. dem verbundenen Computer sicherstellt, dass der wahre Wille des Unterzeichners nicht ignoriert werden kann.

Die Verwendung mehrer Prüfsummen und mehrerer asymmetrischer Schlüsselpaare wie es z.B. in der genannten EP 1 944 716 A1 beschrieben ist, kann den Vorteil aufweisen, dass ein Empfänger die Integrität (d.h. die Unversehrtheit bzw. Nichtveränderbarkeit) des elektronischen Datensatzes prüfen kann, ohne dazu den Schlüssel wie z.B. Private Key eines zweiten asymmetrischen Schlüsselpaares zu benötigen, der es Idem Unterzeichner auch erlauben würde, die biometrischen Daten des Unterzeichners zu entschlüsseln und ggf. zu missbrauchen. Soll nun erfindungsgemäß pro Signaturerfassungsvorgang jedoch nur eine Verschlüsselung wie beispielsweise eine asymmetrische Verschlüsselung mit einem Public Key oder Private Key ausgeführt werden und dennoch sowohl die Integrität des elektronischen Datensatzes inklusive der verschlüsselten biometrischen Daten sichergestellt sein (z.B. durch Verschlüsselung der Prüfsumme mit diesem Schlüssel), als auch die Verschlüsselung der biometrischen Daten selbst abgesichert sein, so hat eine Person, die zur Überprüfung der Integrität des elektronischen Datensatzes und der verschlüsselt enthaltenen biometrischen Daten den Schlüssel zur Entschlüsselung der Prüfsumme hat, ggf. auch die Möglichkeit, diesen Schlüssel zu Entschlüsselung der biometrischen Daten zu verwenden. Sind die biometrischen Daten jedoch erst einmal entschlüsselt, könnte deren Verknüpfung mit dem elektronischen Datensatz, die nur durch die Verschlüsselung sichergestellt ist, aufgehoben werden. Die biometrischen Daten könnten sodann möglicherweise wie eine "Blanko-Unterschrift" missbraucht werden. Die Person, welche die Integrität des elektronischen Dokumentes prüft, ist in der Regel jedoch vorrangig der Empfänger des signierten elektronischen Dokumentes, also nicht der Unterzeichner oder Inhaber der biometrischen Daten. Letzterer möchte dem Empfänger in aller Regel jedoch nicht ermöglichen seine biometrischen Daten missbrauchen zu können. Daher ermöglicht es die vorliegende Erfindung gemäß einem weiteren Aspekt, dass die verschlüsselten biometrischen Daten an einer anderen Stellen gespeichert oder abgelegt werden (z.B. bei einer neutralen Speicherstelle eines neutralen Dritten) als die zur Integritätsprüfung verwendeten verschlüsselten signierten Daten (z.B. die Prüfsumme). So kann die Person, welche die Integrität des elektronischen Datensatzes prüfen möchte, zwar den Schlüssel besitzen, der zur Entschlüsselung der Prüfsumme benötigt wird, diese Person kann dann aber mangels Zugriff auf die andernorts abgelegten biometrischen Daten den Schlüssel nicht zur Entschlüsselung der biometrischen Daten missbrauchen.

Die bisher bekannten Verfahren speichern die zur Integritätsprüfung benötigte Prüfsumme jedoch entweder gemeinsam verschlüsselt mit den biometrischen Daten oder sie verwenden die Prüfsumme selbst als Schlüssel oder Teil des Schlüssels zur Verschlüsselung der biometrischen Daten.

Zur Aufhebung der zusammengehörigen Speicherung und Verschlüsselung der biometrischen Daten und der Prüfsumme kann vorzugsweise erfindungsgemäß ein Signaturerfassungsvorgang-Zufallswert generiert und eingesetzt werden, der nicht nur zur zeitlich, sondern auch zur "örtlich" getrennten Verschlüsselung der Prüfsumme und der biometrischen Daten verwendet werden kann.

Da eine Integritätsprüfung eines elektronischen Datensatzes mit Hilfe einer entschlüsselten "original Prüfsumme" jedoch nur dann möglich ist, wenn man zum Vergleich erneut eine Prüfsumme über die selben vorliegenden Daten bilden, könnte die eingangs offenbarte erfindungsgemäße Vorgehensweise scheinbar ein Problem darstellen. So wurde zuvor als ein beispielhafter Aspekt der vorliegenden Erfindung offenbart, dass die Prüfsumme nicht nur die Integrität des elektronischen Datensatzes sondern auch der zugehörigen biometrischen Daten sichert. Dies könnte allerdings bedeuten, dass die Prüfsumme sowohl über den Inhalt des elektronischen Datensatzes als auch über die verschlüsselten biometrischen Daten gebildet werden muss. Dieser Umstand könnte dann bei einer Prüfung auch bei der Erstellung der zweiten Vergleichsprüfsumme geschehen müssen, selbst dann, wenn, wie in Bezug auf einen anderen Aspekt der vorliegenden Erfindung erwähnt, die verschlüsselten biometrischen Daten außerhalb des direkten Zugriffs der prüfenden Person gespeichert sind.

Für dieses technische Problem gemäß einem weiteren Aspekt der vorliegenden Erfindung vorgeschlagen, eine "intelligente Speicherstelle" für die verschlüsselten biometrischen Daten zu verwenden, wobei in dieser Speicherstelle die Daten nicht nur gespeichert werden, sondern auch die Prüfsummenbildung über diese Daten ermöglicht ist, ohne dass die prüfende Person selbst Zugriff auf die verschlüsselten biometrischen Daten nehmen kann, die diese Person ja mit dem gleichen Schlüssel entschlüsseln könnte. Hierbei sollte gewährleistet sein, dass der Betreiber der erwähnten Speicherstelle seinerseits keine Möglichkeit zur Entschlüsselung der bei dem Betreiber hinterlegten verschlüsselten biometrischen Daten haben sollte..

Gemäß einem weiteren beispielhaften Aspekt der vorliegenden Erfindung kann eine Verschlüsselung der biometrischen Daten unter Verwendung eines zusätzlichen geheimen Schlüssels wie z.B. eine Symbolfolge erfolgen. Dieser geheime, in der Signaturerstellungseinheit abgespeicherte und und von außerhalb der Signaturerstellungseinheit nicht auslesbare Schlüssel kann eine Abfolge von Symbolen sein, wie z.B. ein Passwort. Die geheime Symbolfolge kann bei mehreren Signaturerstellungseinheiten dieselbe sein oder die Symbolfolge kann sich pro Charge oder gar pro Signaturerstellungseinheit unterscheiden. Zur Entschlüsselung der biometrischen Daten mag nicht nur der Signaturerfassungsvorgang-Zufallswert benötigt werden, der der prüfenden Person zugänglich ist, sondern auch noch die geheime Symbolfolge. Somit kann einerseits weiterhin sichergestellt werden, dass die Prüfsumme auch zu dem fraglichen elektronischen Datensatz und den biometrischen Daten gehört, da beide nur unter zur Hilfenahme des selben Signaturerfassungsvorgang-Zufallswertes entschlüsselt werden können. Dennoch reicht der Signaturerfassungsvorgang-Zufallswert alleine nicht zur Entschlüsselung der biometrischen Daten aus. Damit kann gemäß diesem Aspekt der vorliegenden Erfindung möglicherweise die Speicherung der biometrischen Daten an einem dritten Ort überflüssig sein. Der Person, die das elektronische Dokument prüfen will, kann es dennoch nicht ermöglicht sein, die biometrischen Daten zu entschlüsseln. Dennoch würden vielleicht keine zusätzlichen Verschlüsselungsvorgänge oder ein zweites asymmetrisches Schlüsselpaar benötigt werden.

Ein weiterer beispielhafter Aspekt der vorliegenden Erfindung zur möglichen Umgehung einer Speicherung der biometrischen Daten an einem anderen (sicheren) Ort als der datenverarbeitenden Vorrichtung könnte vielleicht darin bestehen, einen asymmetrischen Schlüssel der Signaturerstellungseinheit zur Verschlüsselung einer zweiten Prüfsumme zu verwenden. Dieser Ansatz weist möglicherweise gegenüber dem zuvor erläuterten Aspekt sowohl Vor- als auch Nachteile auf und kann als eine mögliche beispielhafte Alternative betrachtet werden. Ein Vorteil einer später gebildeten zweiten Prüfsumme könnte darin bestehen, dass sie sodann nicht nur den Inhalt des elektronischen Datensatzes nebst der verschlüsselten biometrischen Daten und der verschlüsselten ersten Prüfsumme, die sich gemäß einer beispielhaften Ausführungsform der vorliegenden Erfindung grundsätzlich nur auf den Inhalt des elektronischen Datensatzes und auf die verschlüsselten biometrischen Daten bezieht, sichert, sondern auch den verschlüsselten Signaturerfassungsvorgang-Zufallswert, der zur Entschlüsselung der biometrischen Daten und der ersten Prüfsumme benötigt wird. Ein weiterer Vorteil dieser beispielhaften Alternative könnte vielleicht darin bestehen, dass eine zu prüfende Person die zweite Prüfsumme mit dem asymmetrischen Schlüssel, der mit dem in der Signaturerstellungseinheit gespeicherten asymmetrischen Schlüssel korrespondiert, entschlüsseln kann, jedoch nicht in der Lage ist, mit diesem Schlüssel den Signaturerfassungsvorgang-Zufallswert und somit die verschlüsselten biometrischen Daten entschlüsseln kann. Ein möglicher Nachteil dieser Vorgehensweise könnte vielleicht darin bestehen, dass die Zugehörigkeit der verschlüsselten biometrischen Daten zu diesem Dokument alleine durch die Prüfung der zweiten Prüfsumme nicht ohne weiteres nachvollziehbar ist. Zwar bezieht sich die zweite Prüfsumme auch auf die enthaltenen verschlüsselten biometrischen Daten, ob letztere jedoch auch für dieses Dokument erfasst wurden, ließe sich nur anhand der mit diesen biometrischen Daten verknüpften ersten Prüfsumme einfach ersichtlich nachweisen. Bei dieser Vorgehensweise könnte zudem zu klären sein, womit der Signaturerfassungsvorgang-Zufallswert (welcher als Schlüssel für die biometrischen Daten und die erste Prüfsumme dient) verschlüsselt wird. Es könnte sich hierzu die Verwendung eines zweiten asymmetrischen Schlüssels eines zweiten asymmetrischen Schlüsselpaares anbieten. Der guten Ordnung halber sei erwähnt, dass man ein solches Vorgehen auch auf die in zuvor beschriebenen beispielhaften erfindungsgemäßen Verfahrensweisen anwenden könnte. Dies mag jedoch aus Geschwindigkeitsgründen, d.h. auf Grund der hierfür benötigten Rechenleistung, keine bevorzugte Lösung sein.

Das mögliche Rechenleistungsproblem könnte aber vielleicht gemäß dem nachfolgend beschrieben beispielhaften Aspekt der vorliegenden Erfindung gelöst werden. Der guten Ordnung halber sei an dieser Stelle noch erwähnt, dass die erste Prüfsumme sowohl bei diesem beispielhaften Aspekt der vorliegenden Erfindung als auch bei der darauf folgenden weiteren beispielhaften Ausführungsform der vorliegenden Erfindung überflüssig sein könnte, wenn man die zweite Prüfsumme entweder gemeinsam mit dem Signaturerfassungsvorgang-Zufallswert mit dem ersten asymmetrischen Schlüssel des ersten asymmetrischen Schlüsselpaares verschlüsseln würde, oder aber wenn man die zweite Prüfsumme vor der Verschlüsselung mit dem vorher genanten asymmetrischen Schlüssel mit dem Signaturerfassungsvorgang-Zufallswert verschlüsseln würde. In beiden Fällen wäre die Prüfsumme somit über den Signaturerfassungsvorgang-Zufallswert mit den biometrischen Daten verknüpft. Um in dieser Variante sicher zu stellen, dass die biometrischen Daten trotzdem nicht ohne weiteres von der prüfenden Person entschlüsselt werden können, müsste man dann jedoch bei der Verschlüsselung der biometrischen Daten wieder zusätzlich eine geheime Symbolfolge verwenden. Ein Nachteil könnte vielleicht darin bestehen, dass eine derart verschlüsselte bzw. verknüpfte Prüfsumme nicht mit Standardprogrammen zur Prüfung von digitalen Signaturen kompatibel ist. Der in diesem Aspekt der vorliegenden Erfindung dargestellte Weg der Verwendung einer zweiten Prüfsumme, welche lediglich mit einem asymmetrischen Schlüssel verschlüsselt wurde, ermöglicht es hingegen z.B. PDF-Dokumente so zu signieren, dass zumindest die Dokumentenintegrität mit den üblichen Prüfmechanismen (wie z.B. PPK-Lite in Adobe Acrobat bzw. Adobe Reader) geprüft werden kann.

Um ein wie zuvor beschriebenes erfindungsgemäßes Verfahren möglichst effizient, d.h. weniger rechenintensiv, zu gestalten, könnte als Alternative zur Verwendung eines zweiten asymmetrischen Schlüssels zur Verschlüsselung des Signaturerfassungsvorgang-Zufallswertes eine geheime Symbolfolge in der Signaturerstellungseinheit verwendet werden. Nur wer die geheime Symbolfolge kennt, kann somit den Signaturerfassungsvorgang-Zufallswert und somit die erste Prüfsumme und die biometrischen Daten entschlüsseln. Dennoch wird der äußerst rechenleistungsintensive Schritt einer zweiten asymmetrischen Verschlüsselung pro "Unterzeichnung" vermieden. Die Verwendung einer solchen geheimen aber statischen Symbolfolge (die zumindest pro Signaturerstellungseinheit immer oder zumindest lange gleich bleibt) mag vielleicht mit dem Nachteil behaftet sein, dass alle biometrischen Daten, die mit der Signaturerstellungseinheit verschlüsselt wurden, auch entschlüsselt werden können, wenn diese statische "geheime" Symbolfolge nun doch einmal bekannt würde. Zudem sollte ein solcher "Generalschlüssel" nicht unbedingt beim Hersteller des Gerätes liegen. Neben Sicherheitsaspekten stellt sich hierbei auch die Frage ob der Hersteller in weiterer Zukunft noch existiert, wenn man zur Durchführung einer Identitätsprüfung die biometrischen Daten entschlüsseln muss. Eine Lösung dieses Problems könnte darin bestehen, dass die Signaturerstellungseinheit zwar einen zweiten asymmetrischen Schlüssel eines zweiten asymmetrischen Schlüsselpaares besitzt, diesen aber nur einmalig oder periodisch anwenden muss und daher keine hohe Rechenleistung bzw. lange Wartezeit pro "Unterzeichnung " benötigt. Die Signaturerstellungseinheit erzeugt die geheime Symbolfolge nach einer beispielhaften Ausführungsform der vorliegenden Erfindung nämlich selbst (d.h. sie wird nicht vom Hersteller vorgegeben bzw. aufgespielt und ist diesem auch nicht bekannt). Nach der Erzeugung der geheimen Symbolfolge wird diese nicht auslesbar in der Signaturerstellungseinheit gespeichert, so dass es diese Symbolfolge später zur Verschlüsselung des Signaturerfassungsvorgang-Zufallswertes verwenden kann. Sodann verwendet die Signaturerstellungseinheit den asymmetrischen Schlüssel des zweiten Schlüsselpaares und verschlüsselt die geheime Symbolfolge damit. Dieses verschlüsselte Ergebnis wird jedoch auslesbar in der Signaturerstellungseinheit abgelegt bzw. jedes Mal von diesem gemeinsam mit den verschlüsselten biometrischen Daten übertragen, so dass sie mit diesen abgelegt werden kann. Möchte man nun also die biometrischen Daten entschlüsseln, benötigt man hierzu den Signaturerfassungsvorgang-Zufallswert. Um diesen zu entschlüsseln, benötigt man die geheime Symbolfolge der Signaturerstellungseinheit und um diese zu entschlüsseln benötigt man den zum zweiten asymmetrischen Schlüssel der Signaturerstellungseinheit korrespondierenden asymmetrischen Schlüssel, der z.B. bei einem Notar hinterlegt sein kann. Dieser Aspekt der vorliegenden Erfindung könnte den Vorteil haben, dass eine zweite asymmetrische Verschlüsselung nur periodisch oder gar nur einmalig erfolgen muss (nämlich nur dann, wenn die Signaturerstellungseinheit eine neue geheime Symbolfolge generiert). Zudem muss nur ein asymmetrischer Schlüssel (z.B. bei einem Notar) hinterlegt werden, obwohl jede Signaturerstellungseinheit eine andere und ggf. sogar periodisch wechselnde geheime Symbolfolge zur Verschlüsselung des Signaturerfassungsvorgang-Zufallswertes verwendet. Die Stelle, welche diesen korrespondierenden asymmetrischen Schlüssel besitzt, z.B. also der Notar, muss zudem im Streitfall nicht die entschlüsselte geheime Symbolfolge der Signaturerstellungseinheit herausgeben, die zur Entschlüsselung mehrerer oder gar aller mit dieser Signaturerstellungseinheit erfassten, biometrischen Daten verwendet werden könnte. Der Notar kann die geheime Symbolfolge geheim halten und sie zur Entschlüsselung des Signaturerfassungsvorgang-Zufallswertes der fraglichen Signatur verwenden. Und der Notar mag nur diesen Signaturerfassungsvorgang-Zufallswert, der pro Signaturerfassungsvorgang einmalig sein kann, an die entsprechenden Sachverständigen herausgeben. Da nach diesem beispielhaften Aspekt der vorliegenden Erfindung keine zeitraubende asymmetrische Verschlüsselung für die Sicherung und Verknüpfung der erste Prüfsumme und der biometrischen Daten pro Erfassung benötigt wird, bietet sich dieses Verfahren zudem zur Kombination mit einer zweiten Prüfsumme an, die derart mit einem asymmetrischen Schlüssel eines zweiten asymmetrischen Schlüsselpaares verschlüsselt wird, dass sie in Standardprogrammen (wie z.B. Adobe PKK-Lite) zur Prüfung einer digitalen Signatur (d.h. zur Prüfung der Dokumentenintegrität) verwendet werden kann.

Der guten Ordnung halber sei angemerkt, dass der zum ersten asymmetrischen Schlüssel korrespondierende zweite asymmetrische Schlüssel (also der Schlüssel zu Entschlüsselung der zweiten Prüfsumme, welcher vom Prüfer oder z.B. einem Empfänger des signierten elektronischen Dokumentes benötigt wird), im folgenden auch Prüfschlüssel genannt, ebenfalls auslesbar in dem Signaturerstellungseinheit gespeichert sein kann oder von dieser mit den verschlüsselten Daten ausgegeben werden kann, sodass dieser Schlüssel mit oder in dem elektronischen Datensatz gespeichert werden kann. Damit kann eine prüfende Prüfer diesen Prüfschlüssel mit dem signierten elektronischen Datensatz mitgeliefert bekommen. Des Weiteren sei erwähnt, dass dieser "Prüfschlüssel" z.B. durch ein Zertifikat auch einer Signaturerstellungseinheit (z.B. der Serienummer) oder dem Hersteller des Gerätes, oder dessen Besitzer etc. zugeordnet sein kann. So kann eine prüfende Person nachvollziehen, dass es sich bei dem ggf. mitgelieferten Prüfschlüssel tatsächlich um einen asymmetrischen Schlüssel handelt, der zu einem asymmetrischen Schlüssel korrespondiert, welcher sich in einer "sicheren" Signaturerstellungseinheit (ggf. sogar in einem seiner eigenen Signaturerstellungseinheit) befindet.

Wie aus den erläuterten Ausführungsbeispielen der vorliegenden Erfindung erkennbar ist, kann ein eine verbesserte oder erhöhte Sicherheit bei einem Verfahren zur elektronischen Signatur mit einer verstärkten Verlagerung der Verfahrenschritte in die Signaturerstellungseinheit verbunden sein, da diese wesendlich sicherer gegen Manipulation ist als die datenverarbeitende Vorrichtung. Der genannten Verfahrensschrittverlagerung mag jedoch in der Praxis die begrenzte Rechenleistung eines solchen Gerätes (sofern es bezahlbar und handhabbar sein soll, also z.B. Batterie betrieben ist oder mit der über einen USB-Anschluss zur Verfügung gestellten begrenzten Energiemenge auskommen soll und man auch möchte, dass die Signaturerstellungseinheit zügig arbeitet und nicht pro Erfassungsvorgang sehr viel Zeit für die Berechnungen benötigt).

Soll eine möglichst hohe Sicherheit erreicht werden, so sollte nicht nur die Verschlüsselung der biometrische Daten und die Verknüpfung und Verschlüsselung der Prüfsummen in der Signaturerstellungseinheit erfolgen, sondern am besten auch die Prüfsummenbildung über den elektronischen Datensatz und auch dessen Darstellung sowie der dazu benötigten Aufbereitung zur Darstellung. Dies ist Modifizierung der offenbarten erfindungsgemäßen Verfahrensweisen möglich, kann aber bei der Umsetzung in die Praxis, je nach Art des elektronischen Datensatzes, auf Grund der limitierten Rechenleistung evtl. nur schwer oder gar nicht umsetzbar sein. Dies trifft vor allem auf sehr komplexe elektronische Datensätze wie z.B. PDF-Dateien zu.

Die Erzeugung der Darstellung (Rendering) einer PDF-Datei kann enorm rechenintensiv sein. Zugleich kommt es aber vor, dass der Unterzeichner garnicht notwendigerweise den elektronischen Datensatz selbst (in diesem Beispiel die PDF-Datei) signieren muss. Es würde ausreichen, wenn er den darstellbaren Inhalt , also das z.B. das Ergebnis des PDF-Rendering oder z.B. ein oder mehrere Bitmaps, JPGs oder PNGs oder eine andere, mit wenig oder keinem Rechenaufwand in der Signaturerstellungseinheit verbundene Form, welche auf einem Darstellungsdisplay der Signaturerstellungseinheit angezeigt werden kann, unterzeichnet. Daher ist gemäß einem weiteren Aspekt der vorliegenden Erfindung vorgesehen, nicht den elektronischen Datensatz selbst zu signieren sondern nur dessen darstellbaren Inhalt. In der Praxis könnte daher der "unsichere" Computer die rechenintensive Arbeit übernehmen, z.B. den komplexen elektronischen Datensatz (in dem Beispiel die PDF-Datei) zur Darstellung aufzubereiten (also z.B. zu Rendern). Dieser darstellbare Inhalt (z.B. ein oder mehrere Bitmaps, JPGs oder PNGs) könnte dann an die Signaturerstellungseinheit übertragen und dort angezeigt werden. Der Unterzeichner könnte diesen dann dort lesen bzw. in Augenschein nehmen und nach einem der vorhergehenden Verfahren unterzeichnen. Unterschied dabei ist, dass die Signaturerstellungseinheit die Prüfsumme nicht mehr über den elektronischen Datensatz selbst bilden würde, sondern über die in die Signaturerstellungseinheit geladene, zur Darstellung aufbereitete Form (in dem genannten Beispiel also über eine oder mehrere Bitmaps, JPGs oder PNGs).

Bei der Integritätsprüfung würde man dann aus dem fraglichen elektronischen Datensatz mit den identischen Verfahren wieder den darstellbaren Inhalt aufbereiten und die zur Prüfung benötigte Prüfsumme nur über diesen darstellbaren Inhalt bilden, um diese mit der von der Signaturerstellungseinheit erzeugten und verschlüsselten Prüfsumme zu vergleichen. Somit würde die Prüfsumme nicht mehr die Integrität des elektronischen Datensatzes nebst der verschlüsselten biometrischen Daten wahren, sondern die Integrität der für den Unterzeichner sichtbaren Darstellung des elektronischen Datensatzes, nebst den verschlüsselten biometrischen Daten. In vielen Fällen kann diese Art von Sicherheit vollkommen ausreichend sein, da man in vielen Fällen davon ausgehen kann, das der Unterzeichner nur das unterzeichnen wollte und konnte, was ihm dargestellt wurde. Alternativ könnte auch der darstellbare Inhalt, der auf der Signaturerstellungseinheit angezeigt wurde und über welchen die Signaturerstellungseinheit die Prüfsumme gebildet hat, gleich mit oder in dem elektronischen Datensatz abgelegt werden, so dass man diesen bei einer späteren Prüfung nicht mehr neu erzeugen muss. Dieses Vorgehen kann sinnvoll sein, wenn man nicht sicher ist, ob man in einigen Jahren oder gar Jahrzehnten auf einem zukünftigen Betriebssystem nochmals einen Bit genauen, identischen darstellbaren Inhalt aus dem vorliegenden elektronischen Datensatz erzeugen kann

In einigen Anwendungsbereichen, wie zum Beispiel im Bereich der Banken, mag ein Empfänger den elektronisch unterzeichneten elektronischen Datensatz nicht nur auf dessen Integrität prüfen, sondern er möchte auch die Zugehörigkeit des biometrischen Merkmals, d.h. der biometrischen Daten, zum Unterzeichner prüfen (z.B. Auszahlungsbeleg am Bankschalter). Um eine solche Prüfung automatisiert durchzuführen, werden in der Regel sogenannte Verifikations-Engines verwendet. Eine Verifikations-Engine vergleicht die neu erfassten biometrischen Daten gegen hinterlegte Referenzmuster und bestimmt anhand deren Ähnlichkeit, ob es sich tatsächlich um das biometrische Merkmal der betreffenden Person handelt. Solche Verifikations-Engines (zumeinst ein Sotwareprogramm) gibt es bereits für alle möglichen biometrischen Merkmale (Fingerabdrücke, Unterschriften, Stimmmuster, Iris-Scan etc.). Der Betreiber des Systems (z.B. die Bank) steht beim Einsatz eines solchen Verfahrens jedoch stets vor dem Problem, dass die biometrischen Daten des Unterzeichners verwertbar, d.h. unverschlüsselt und somit nicht mit einem speziellen elektronischen Datensatz verknüpft, an die Verifikations-Engine gesendet werden müssen. Bei dieser Gelegenheit könnte der Betreiber oder ein Dritter jedoch auch an eine Kopie dieser biometrischen Daten gelangen, die mangels Verknüpfung und Verschlüsselung mit einem speziellen elektronischen Datensatz auch als "Blankounterschrift" missbraucht werden könnte. Ein Betreiber einer solchen Verifikations-Engine, der die biometrischen Daten seiner Unterzeichner auch für sichere elektronische Signaturen verwenden möchte, steht somit vor der Fragestellung, wie er beweisen kann, dass ein spezielles biometrisches Merkmal eines Unterzeichners tatsächlich zur Unterzeichnung eines speziellen elektronischen Datensatzes abgegeben wurde und es sich dabei nicht um die Kopie eines biometrischen Merkmals dieses Unterzeichners handelt, welches dieser ausschließlich zur Verifikation abgegeben hat.

Dieses Problem mag durch eine weitere beispielhafte Ausführungsform der vorliegenden Erfindung gelöst werden, indem die Signaturerstellungseinheit eine mathematische Kurzdarstellung der für den automatischen Vergleich benötigten biometrischen Merkmale errechnet und nur diese unverschlüsselt herausgibt, im Folgenden auch als BioRef bezeichnet (Abkürung für Bio-Referenz). Auf den ersten Blick bietet sich hier natürlich wieder die Erstellung einer Prüfsumme an. Prüfsummen sind jedoch nur dann identisch, wenn der Datensatz, über welchen Sie gebildet werden, ebenfalls Bit genau identisch ist. Genau dies im Falle eines biometrischen Merkmals jedoch zumeist nicht gegeben. Zwar kann z.B. eine Unterschrift in den meisten Fällen einer Person eindeutig zugeordnet werden, dennoch ist jede Unterschrift dieser Person unterschiedlich und nie absolut identisch mit den vorherigen. Die BioRef ist daher eine abstrahierte mathematische Kurzdarstellung beliebiger Aspekte der biometrischen Daten. Sie darf dabei jedoch nicht ausreichend sein, um aus ihr die biometrischen Daten (z.B. den Fingerabdruck, die digitalisierte Unterschrift etc.) komplett zu rekonstruieren. Die BioRef muss jedoch ausreichend einmalig sein, um der Verifikations-Engine den Vergleich mit anderen bereits erfassten mathematischen Kurzdarstellungen des biometrischen Merkmals des Unterzeichners zu ermöglichen. Im Falle einer digitalisierten Unterschrift könnte eine solche BioRef z.B. aus einer Prozentangabe der vorherrschenden Schreibrichtung im Verhältnis zur Gesamtzeit der Unterschrift bestehen (z.B. 90% Richtung rechts, 7% Richtung oben 2% Richtung links, 1% Richtung unten). Zudem könnte evtl. der Druck wie folgt dargestellt werden (Differenz von Minimaldruck und Maximaldruck 200%, durchschnittlicher Druck im Verhältnis zum Maximaldruck 50%, durchschnittlicher Druckverlauf von Anfang bis Ende der Unterschrift ist ansteigend oder abfallend, etc.). Auf diese Art und Weise ließen sich genügend dynamische Parameter wie Druck, Beschleunigung, Schreibrichtung etc. in charakteristische Merkmale verwandeln, welche zwar einmalig für das biometrische Merkmal einer Person sind, jedoch nicht geeignet sind, um die biometrischen Daten so zu rekonstruieren, dass ein Sachverständiger (im Falle einer digitalisierten Unterschrift z.B. ein Schriftsachverständiger) ein so nachgebautes biometrisches Merkmal nicht von dem echten biometrischen Merkmal unterscheiden könnte. Selbstverständlich können bei der Erstellung einer solchen BioRef auch weitaus komplexere mathematische Verfahren zum Einsatz kommen, die z.B. Kurven beschreiben oder die Anzahl eingeschlossener Flächen (wie z.B. in einem O) etc. Wichtig ist ausschließlich, das eine BioRef eine genügend große Summe abstrahierte Merkmale der biometrischen Daten enthält, um einer Verifikation-Engine genügend Differenzierungsmerkmale zu liefern, ohne jedoch die biometrischen Daten so zu beschreiben, dass dieses aus der BioRef rekonstruiert werden können.

### Kurze Beschreibung der Zeichnungen

Fig. 1 zeigt schematisch eine beispielhafte Ausführungsform eines Computersystem mit datenverarbeitender Vorrichtung und Signaturerfassungseinheit gemäß der vorliegenden Erfindung,
Fig. 2a zeigt einen ersten Teil eines Flussdiagramm einer beispielhaften Ausführungsform eines erfindungsgemäßen Verfahrens,
Fig. 2b zeigt einen zweiten Teil des Flussdiagramm der beispielhaften Ausführungsform eines erfindungsgemäßen Verfahrens der Fig. 2a,
Fig. 3 zeigt eine beispielhafte alternative Ausführungsform des zweiten Teils des Flussdiagramm des erfindungsgemäßen Verfahrens der Fig. 2a,
Fig. 4 zeigt eine weitere beispielhafte alternative Ausführungsform des ersten Teils des Flussdiagramm des erfindungsgemäßen Verfahrens der Fig. 2b oder 3, und
Fig. 5 zeigt noch eine weitere beispielhafte alternative Ausführungsform des zweiten Teil des Flussdiagramm des erfindungsgemäßen Verfahrens der Fig. 2a.

### Detaillierte Beschreibung beispielhafter Ausführungsformen der vorliegenden Erfindung

### 1. Ausführungsbeispiel eines erfindungsgemäßen Verfahrens

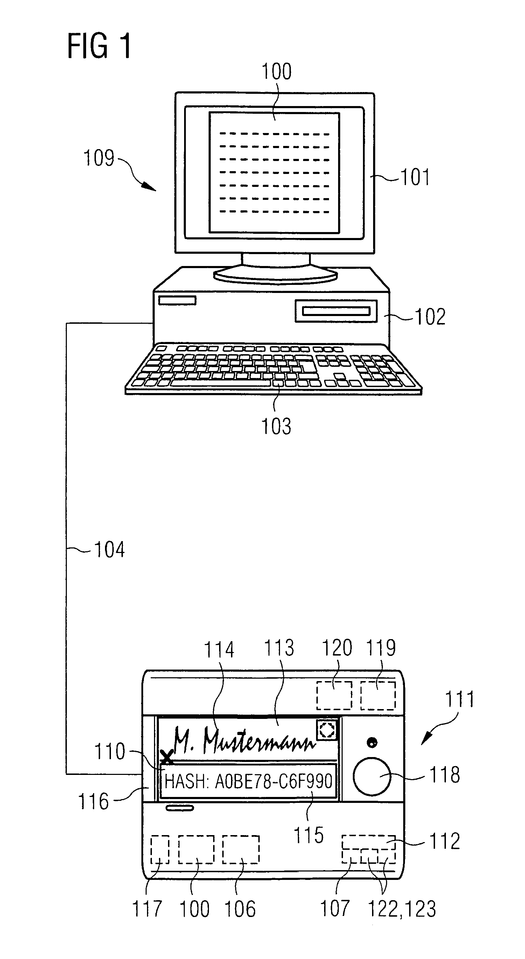

Die Fig. 1 zeigt schematisch eine beispielhafte Ausführungsform eines Computersystems gemäß der vorliegenden Erfindung. Das Computersystem umfasst grundsätzlich eine datenverarbeitende Vorrichtung 109 und eine Signaturerstellungseinheit 111, die über beispielsweise ein Kabel 104 mit der datenverarbeitenden Vorrichtung 109 in bidirektionaler Kommunikationsverbindung stehen kann. Alternativ können die beiden Vorrichtungen 109 und 111 auch anderweitig miteinander kommunizieren, beispielsweise über eine drahtlose Verbindung, z.B. gemäß Bluetooth, oder eine andere Kommunikationsverbindung wie beispielsweise per Infrarot.

Die datenverarbeitende Vorrichtung 109 umfasst einen Monitor 101, auf dem beispielsweise das elektronisch zu signierende elektronische Dokument 100 angezeigt werden kann. Der Monitor 101 ist mit dem eigentlichen Computer 102 verbunden, der beispielsweise über eine Tastatur 103 bedient werden kann.

Die Signaturerstellungseinheit 111 kann ein Display 113 umfassen, auf dem eine natürliche Person beispielsweise eine Unterschrift 114 leisten kann, die durch entsprechende Sensoren in der Signaturerstellungseinheit 111 erfassbar ist. Die Erfassung der Unterschrift 114 kann beispielsweise biometrische Merkmale der Unterschrift erfassen, wie zum Beispiel den Druckverlauf über die Zeit, etc. Optional kann auch eine Prüfsumme 115 in dem Display 113 angezeigt werden. Eine Datenkommunikationseinrichtung 116 in der Signaturerstellungseinheit 111 ermöglicht hier in Verbindung mit dem Kabel 104 die bidirektionale Kommunikation mit der datenverarbeitenden Vorrichtung 109.

Ein von außerhalb der Signaturerstellungseinheit 111 nicht auslesbarer Speicher 112 ist vorhanden, indem beispielsweise ein Schlüssel 122, 123 abgespeichert sein kann. In diesem Speicher können auch andere temporär oder dauerhaft verfügbare Daten oder Schlüssel abgespeichert werden.

Es kann auch ein Signaturerfassungsvorgang-Zufallswerterzeugungseinrichtung 119 vorhanden sein.

Ferner kann eine Erfassungseinrichtung 118 dazu ausgebildet sein, wenigstens eines der eingangs genannten biometrischen Merkmale einer natürlichen Person die den elektronischen Datensatz zu unterzeichnen hat, zu erfassen und hieraus einen elektronischen biometrischen Datensatz zu erzeugen.

Eine allgemeine Verschlüsselungseinrichtung 117 ist hier schematisch dargestellt. Die Verschlüsselungseinrichtung 117 kann dazu ausgebildet sein, ein Verschlüsselungsverfahren unter Verwendung eines oder mehrerer, in der Signaturerstellungseinheit 111 abgespeicherter Schlüssel 122, 123 durchzuführen. Die Verschlüsselungseinrichtung 117 kann ferner dazu ausgebildet sein, den erzeugten biometrischen Datensatz unter Verwendung eines erzeugten Signaturerfassungsvorgangs-Zufallswertes 106 zu verschlüsseln. Zudem kann die Verschlüsselungseinrichtung 117 dazu ausgebildet sein, den erzeugten Signaturerfassungsvorgang-Zufallswert 106 in der Signaturdarstellungseinheit 111 unter Verwendung der ersten Prüfsumme 115 zu verschlüsseln. Die Verschlüsselungseinrichtung 117 kann auch dazu ausgebildet sein, den unter Verwendung der ersten Prüfsumme verschlüsselten Signaturerfassungsvorgang-Zufallswert 106 unter Verwendung des in der Signaturerstellungseinheit 111 gespeicherten Schlüssels 122, 123 zu verschlüsseln.

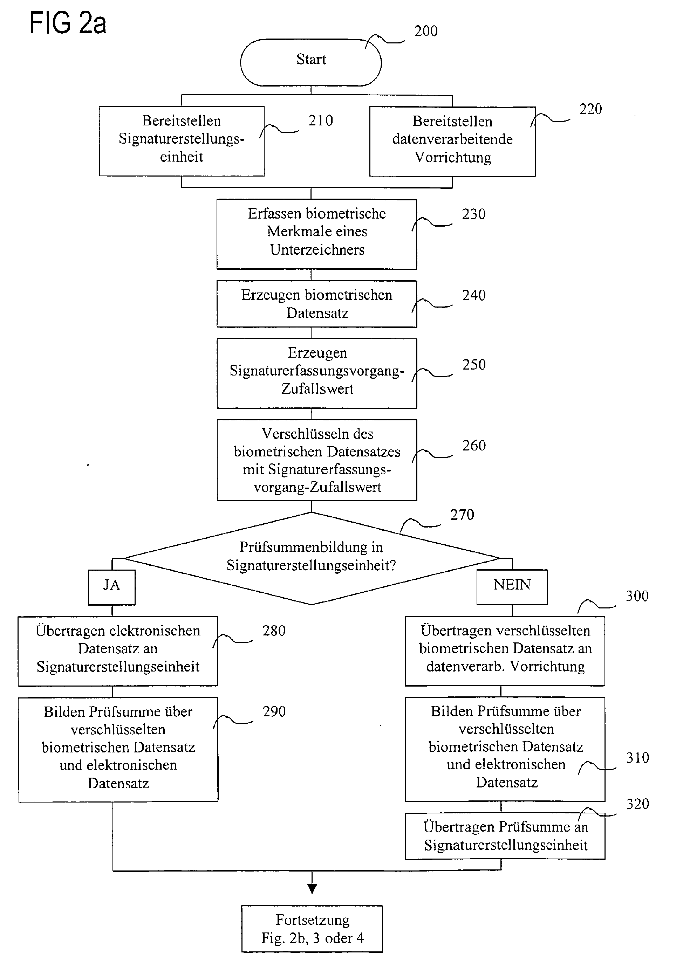

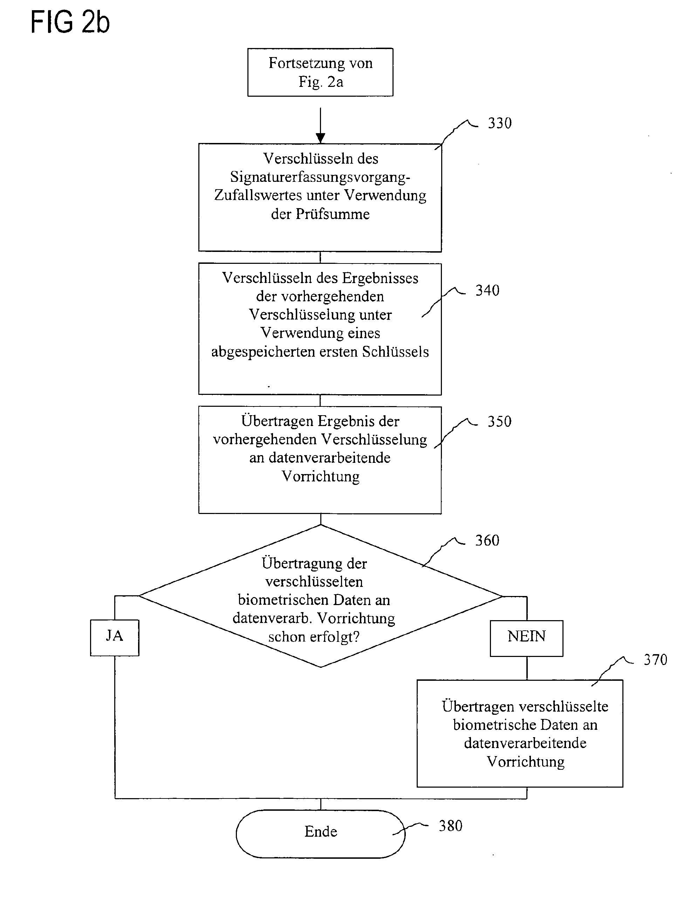

Eine erste beispielhafte Ausführungsform eines erfindungsgemäßen Verfahrens, das z.B. mit einem in der Fig. 1 gezeigten Computersystem ausführbar ist, wird nachfolgend anhand des in den Fig. 2a und 2b gezeigten Flussdiagramms erläutert. Anzumerken ist, dass die einzelnen Verfahrensschritte nicht zwangsläufig in der genannten Reihenfolge durchgeführt werden müssen. So können mehrere Verfahrensschritte auch gleichzeitig oder in anderer Reihenfolge durchgeführt werden. Nach dem Beginn der Routine erfolgt das Bereitstellen der Signaturerstellungseinheit 111, Schritt 210, und der datenverarbeitenden Vorrichtung 109, Schritt 220.

Es wird wenigstens ein biometrisches Merkmal einer natürlichen Person, die den elektronischen Datensatz 100 elektronisch zu unterzeichnen hat, mittels der Signaturerstellungseinheit 111 erfasst, Schritt 230, und hieraus ein elektronischer biometrischer Datensatz in der Signaturerstellungseinheit 111 erzeugt, Schritt 240. Im Schritt 250 generiert die Signaturerstellungseinheit 111 einen Signaturerfassungsvorgang-Zufallswert 106. Im Schritt 260 wird der biometrische Datensatz mit dem Signaturerfassungsvorgang-Zufallswert verschlüsselt.

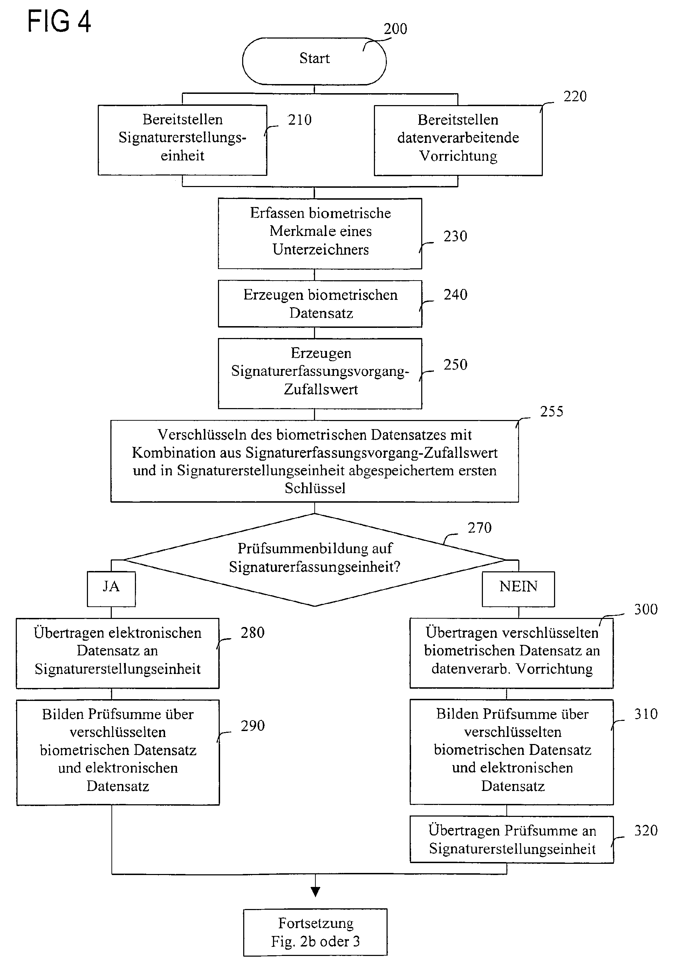

Eine Alternative gemäß der Fig. 4 sieht vor, dass im Schritt 255 der biometrische Datensatz mit einer Kombination aus Signaturerfassungsvorgang-Zufallswert und in der Signaturerstellungseinheit 111 abgespeichertem ersten Schlüssel, z.B. einem asymmetrischen ersten Schlüssel, verschlüsselt wird.

Im Schritt 270 erfolgt die Abfrage, wo die Prüfsummenbildung stattfinden soll. Falls die Prüfsummenbildung in der Signaturerstellungseinheit 111 erfolgen soll, wird im Schritt 280 der elektronische Datensatz an die Signaturerstellungseinheit 111 übertragen und dann die Prüfsumme 115 über den verschlüsselten biometrischen Datensatz und den hiermit vereinigten elektronischen Datensatz gebildet, Schritt 290.

Falls die Prüfsummenbildung in der datenverarbeitenden Vorrichtung 109 erfolgt, wird im Schritt 300 der verschlüsselte biometrische Datensatz an die datenverarbeitende Vorrichtung 109 übertragen. Dort erfolgt dann im Schritt 310 die Prüfsumme 115 gebildet. Die externe datenverarbeitenden Vorrichtung 109 überträgt dann die gebildete Prüfsumme 105 zur Signaturerstellungseinheit 111, Schritt 320.

### Optionaler Verfahrensschritt a:

Optional kann die Signaturerstellungseinheit 111, sofern diese über eine Darstellungsmöglichkeit bzw. einen Darstellungsbereich 110 verfügt, die Prüfsumme 115 nun optisch anzeigen. Hierbei kann es sich um die gesamte Prüfsumme, oder der schnelleren Vergleichbarkeit halber auch um eine Kurzdarstellung der Prüfsumme handeln. Dieser optionale Schritt kann insbesondere dann vorteilhaft sein, wenn die Bildung der Prüfsumme 115 auf der datenverarbeitenden Vorrichtung 109 erfolgt. Der Unterzeichner, also die Person, deren biometrische Daten von der Signaturerstellungseinheit 111 erfasst wurden, könnte dann die Prüfsumme 115 auf der Signaturerstellungseinheit 111 mit der evtl. auf der datenverarbeitenden Vorrichtung 109 angezeigten Prüfsumme 115 vergleichen und somit sicherstellen, dass die Übertragung der Prüfsumme 115 von der datenverarbeitenden Vorrichtung 109 auf die Signaturerstellungseinheit 111 nicht manipuliert wurde. Des Weiteren könnte die Signaturerstellungseinheit 111 zusätzlich eine Bestätigung, beispielsweise in Form eines Hinweisfensters mit einer OK- und einer Abbrechen-Taste, einfordern. Diese Vorgehensweise hätte zum Ziel, den Unterzeichner nochmals deutlich auf die angezeigte Prüfsumme 115 hinzuweisen und von diesem eine Bestätigung dafür einzuholen, dass er diese wahrgenommen und ggf. mit der auf der datenverarbeitenden Vorrichtung 109 angezeigten Prüfsumme verglichen hat. Verweigert der Unterzeichner die Bestätigung, könnte dann die Signaturerstellungseinheit 111 selbständig den Vorgang abbrechen, also z.B. die Verschlüsselung abbrechen oder die benötigten Daten einfach nicht an die datenverarbeitende Vorrichtung 109 übertragen. Somit wäre sichergestellt, dass die ggf. unsichere datenverarbeitende Vorrichtung 109 die Verweigerung des Unterzeichners nicht einfach ignorieren kann.

### Optionaler Verfahrensschritt b:

Sofern die Signaturerstellungseinheit 111 über eine ausreichende Darstellungsmöglichkeit bzw. einen Darstellungsbereich 110 verfügt, könnte es optional zusätzlich oder alternativ auch den elektronischen Datensatz 100 selbst bzw. zumindest relevante Teile dieses elektronischen Datensatzes zur Anzeige bringen. Handelt es sich um einen längeren elektronischen Datensatz 100, z.B. ein mehrseitiges elektronisches Dokument, wäre es auch denkbar, dass die Signaturerstellungseinheit 111 Steuerelemente besitzt, um in dem langen Datensatz 100 zu manövrieren (z.B. Scrollen) und/oder durch einen mehrseitigen Datensatz 100 zu blättern und/oder dessen Anzeigegröße zu variieren (Zoomen). Diese Lösung könnte vor allem dann vorteilhaft sein, wenn der elektronische Datensatz 100 zur Bildung der Prüfsumme 115 in der Signaturerstellungseinheit 111 von der datenverarbeitenden Vorrichtung 109 an die Signaturerstellungseinheit 111 übertragen wurde. So kann der Unterzeichner auf der Signaturerstellungseinheit 111 selbst überprüfen, ob der richtige elektronische Datensatz 100 übertragen wurde. Aber selbst wenn die Prüfsumme 115 über den elektronischen Datensatz 100 nicht in der Signaturerstellungseinheit 111 gebildet wird, kann die Anzeige des Datensatzes 100 in der Signaturerstellungseinheit 111 evtl. eine zusätzliche Sicherheit darstellen. Selbstverständlich kann dies auch in Kombination mit der Anzeige der Prüfsumme 115, wie zuvor beschrieben, geschehen.

### Optionaler Verfahrensschritt c:

Der guten Ordnung halber sei erwähnt, dass eine Signaturerstellungseinheit 111 mit einer Darstellungsmöglichkeit bzw. einem Darstellungsbereich 110 die erfassten biometrische Daten visualisieren könnte. Der Darstellungsbereich 110 zur Visualisierung der biometrischen Daten könnte zudem gleichzeitig der Ort der Erfassung des Merkmales sein, z.B. durchsichtiger Sensor zur Erfassung der biometrischen Daten einer handgeschriebenen Unterschrift über einem LCD-Display, wie es grundsätzlich in US 5,297,202 offenbart ist. Des weiteren könnte der Darstellungsbereich 110 gleichzeitig der zuvor erwähnte Darstellungsbereich 110 für die Prüfsumme 115 und/oder den elektronischen Datensatz 100 sein. Die Signaturerstellungseinheit 111 könnte daher so ausgestaltet sein, dass es die Erfassung des biometrischen Merkmals, z.B. der Unterschrift, nur auf dem Teil des Darstellungsbereiches 110 gestattet, der den Teil des elektronischen Datensatzes 100 darstellt, indem die Signatur aufgebracht werden soll. Diese beispielhafte Ausgestaltung einer Signaturerstellungseinheit 111 könnte die örtliche Nähe der Merkmalsabgabe zu einem bestimmten Text oder Inhalt wahren, analog wie bei einem "Unterschriftenfeld" auf einem Papierdokument.

Verfahrensschritt 330: Die Signaturerstellungseinheit 111 verschlüsselt nun den erzeugten Signaturerfassungsvorgang-Zufallswert mit der gebildeten Prüfsumme 115.

Anschließend verwendet die Signaturerstellungseinheit 111 einen in diesem gespeicherten und nicht von außerhalb der Signaturerstellungseinheit 111 auslesbaren Schlüssel zur Verschlüsselung des Ergebnisses der vorhergehenden Verschlüsselung, Schritt 340. Vorzugsweise ist der zum Einsatz kommende Schlüssel ein asymmetrischer Schlüssel 122 oder 123 zur asymmetrischen Verschlüsselung des zuvor mit der Prüfsumme 115 symmetrisch verschlüsselten Signaturerfassungsvorgang-Zufallswertes.

Anschließend überträgt die Signaturerstellungseinheit 111 diesen so verschlüsselten Signaturerfassungsvorgang-Zufallswert, ggf. gemeinsam mit dem elektronischen Datensatz 100, sofern dieser zur Bildung der Prüfsumme in die Signaturerstellungseinheit 111 geladen wurde, an die datenverarbeitende Vorrichtung 109, Schritt 350. Gegebenfalls werden auch die verschlüsselten biometrischen Daten, sofern diese noch nicht übertragen wurden, Abfrage 360, an die datenverarbeitende Vorrichtung 109 übertragen, Schritt 370.

Eine Entschlüsselung der biometrischen Daten ist nach diesem beispielhaften ersten erfindungsgemäßen Signaturverfahren somit nur dann möglich, wenn man im Besitz des geheimen, in der Signaturerstellungseinheit 111 abgespeicherten Schlüssels ist und weder der Inhalt des elektronischen Datensatzes 100 noch die verschlüsselten biometrischen Daten verändert wurden. Ist der in der Signaturerstellungseinheit 111 abgespeicherte Schlüssel ein asymmetrischer Schlüssel, so kann eine Entschlüsselung der biometrischen Daten nur dann erfolgen, wenn ein Dritter im Besitz des zu dem in der Signaturerstellungseinheit hinterlegten asymmetrischen Schlüssel korrespondierenden asymmetrischen Schlüssels ist, und wenn weder der Inhalt des elektronischen Datensatzes, noch die verschlüsselten biometrischen Daten verändert wurden. Nur dann kann man erneut eine Prüfsumme mit identischem Wert erzeugen, wie sie in Verfahrensschritt 4 erzeugt wurde. Nur mit Hilfe dieser beiden Werte (also dem korrespondierenden asymmetrischen Schlüssel 122 oder 123 und der sich aus den unversehrten Daten ergebenden Prüfsumme) kann man den Signaturerfassungsvorgang-Zufallswert entschlüsseln und somit an die entschlüsselten (verwertbaren) biometrischen Daten gelangen. Dieses Verfahren kann mit dem Vorteil verknüpft sein, dass die biometrischen Daten bei einer Veränderung oder Manipulation des elektronischen Datensatzes 100 automatisch unentschlüsselbar und somit unbrauchbar werden.

### 2. Ausführungsbeispiel eines erfindungsgemäßen Verfahrens

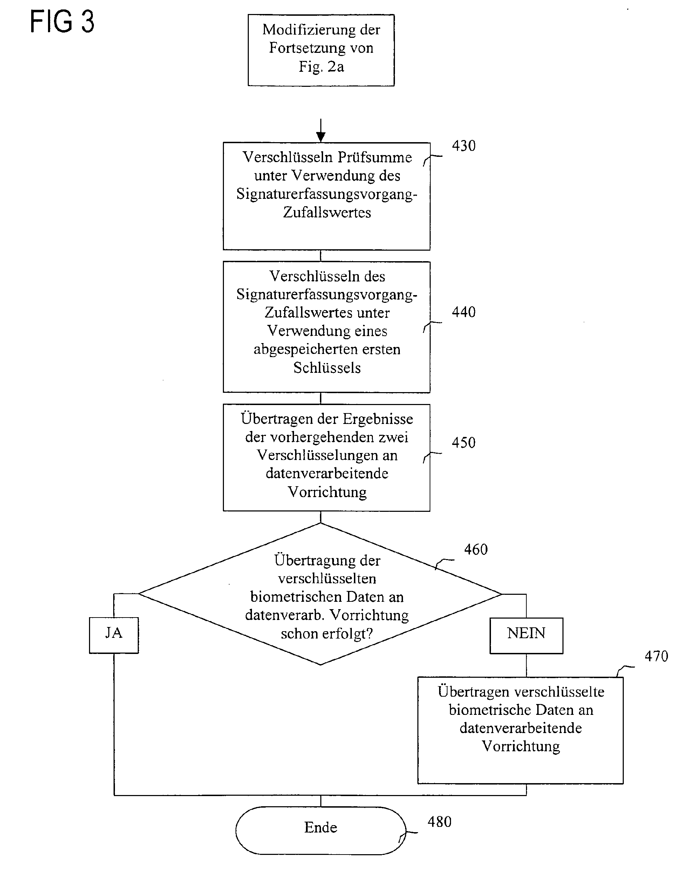

Eine weitere beispielhafte Ausführungsform eines Verfahrens gemäß der vorliegenden Erfindung umfasst die zuvor beschriebenen Verfahrensschritte 1 und 2 und die optionalen Verfahrensschritte a-c des ersten Ausführungsbeispiels. Die weiteren Verfahrensschritte werden wie folgt abgewandelt, siehe hierzu auch Fig. 3:

Die Signaturerstellungseinheit 111 verwendet den Signaturerfassungsvorgang-Zufallswert 106, um damit die gebildete Prüfsumme 115 zu verschlüsseln, Schritt 430. Anschließend verwendet die Signaturerstellungseinheit 111 einen in diesem gespeicherten und nicht auslesbaren asymmetrischen Schlüssel 122 oder 123 zur Verschlüsselung des Signaturerfassungsvorgang-Zufallswertes 106, Schritt 440. Nun überträgt die Signaturerstellungseinheit 111 diese so verschlüsselte Prüfsumme nebst dem verschlüsseltem Signaturerfassungsvorgang-Zufallswert (ggf. gemeinsam mit dem elektronischen Datensatz, sofern dieser zur Bildung der Prüfsumme in das Signaturerstellungseinheit 111 geladen wurde und ggf. den verschlüsselten biometrischen Daten, sofern diese noch nicht übertragen wurden) an die datenverarbeitende Vorrichtung 109, Schritt 450. Die Schritte 460-480 entsprechen den Schritten 360-380 des vorhergehenden Ausführungsbeispiels.

Im Gegensatz zu dem ersten Ausführungsbeispiel kann man nun die verschlüsselten biometrischen Daten auch dann entschlüsseln, wenn der Datensatz verändert wurde. Zur Entschlüsselung benötigt man gemäß diesem Ausführungsbeispiel lediglich den Signaturerfassungsvorgang-Zufallswert, den man mit Hilfe des korrekten asymmetrische Schlüssels 122, 123 entschlüsseln kann. Eine sichere Zugehörigkeits- und Integritätsprüfung ist jedoch dennoch möglich, da man sicher sein kann, dass sich die verschlüsselte Prüfsumme nur dann mit demselben Signaturerfassungsvorgang-Zufallswert entschlüsseln lässt, wenn diese Prüfsumme auch bei der Erfassung dieser biometrischen Daten in Verbindung mit diesem elektronischen Datensatz verschlüsselt wurde. Man muss nun nochmals eine Prüfsumme bilden und diese mit der entschlüsselten Prüfsumme vergleichen, um auch die Integrität der Daten prüfen zu können. Die verschlüsselte Prüfsumme und die verschlüsselten biometrischen Daten können bei diesem Verfahren jedoch sowohl gemeinsam mit oder in dem elektronischen Datensatz 100 gespeichert werden, als auch separat voneinander abgelegt bzw. gespeichert werden. Gleiches gilt für den verschlüsselten Signaturerfassungsvorgang-Zufallswert.

### 3. Ausführungsbeispiel eines erfindungsgemäßen Verfahrens

Die im Verfahrensschritt 260 des ersten und zweiten Ausführungsbeispiels verschlüsselten biometrischen Daten werden von der Signaturerstellungseinheit 111 direkt oder mittels einer weiteren Vorrichtung (z.B. einem angeschlossenen Computer wie der datenverarbeitenden Vorrichtung 109) an einen sicheren Speicherort übertragen, z.B. an einen externen Server, der beispielsweise über das Internet erreichbar ist. Von diesem sicheren Speicherort sollten die verschlüsselten biometrischen Daten ohne Freigabe des Betreibers des Speicherortes nicht mehr ausgelesen werden können.

Nur die gemäß des ersten oder zweiten Ausführungsbeispiels ausgegebene verschlüsselte Prüfsumme 115 und der verschlüsselte Signaturerfassungsvorgang-Zufallswert 106 werden mit oder in dem elektronischen Datensatz gespeichert. Somit hat der Empfänger des elektronischen Dokumentes 100 mit Hilfe des zur Signaturerstellungseinheit 111 korrespondierenden asymmetrischen Schlüssels 122, 123 die Möglichkeit, den Signaturerfassungsvorgang-Zufallswert und somit die Prüfsumme zu entschlüsseln. Der Empfänger hat jedoch mangels Zugriff auf den Speicherort der verschlüsselten biometrischen Daten keine Möglichkeit, diese biometrischen Daten zu entschlüsseln.

Der Zugriff auf diese biometrischen Daten wird der Betreiber der Speichereinrichtung nur einem vom Gericht bestellten Experten gewähren oder dann freigeben, wenn sich sowohl der Unterzeichner, also der Inhaber der biometrischen Daten, als auch der Prüfende sich darüber einig sind, dass dies geschehen soll.

Um nun aber einem Prüfer dennoch zu ermöglichen, eine neue Prüfsumme über den elektronischen Datensatz 100 und die biometrischen Daten zu bilden, um diese mit der entschlüsselten Prüfsumme vergleichen zu können, muss der Speicherort die Bildung einer Prüfsumme über die verschlüsselten biometrischen Daten ermöglichen. Hierzu kann es mehrer Ansätze geben.

Eine Möglichkeit besteht darin, dass der Prüfende den fraglichen elektronischen Datensatz an den Speicherort überträgt und dieser die Bildung der Prüfsumme über den elektronischen Datensatz 100 und die bei ihm sicher hinterlegten biometrischen Daten vornimmt und dem Prüfenden diese Prüfsumme als Ergebnis zurück überträgt. Da Prüfsummenalgorithmen zumeist Stream basiert arbeiten gibt es jedoch auch die Möglichkeit, dass der Prüfende die Prüfsumme über die Ihm zur Verfügung stehenden Daten bildet und dann den Stand der Prüfsummenberechnung an den Speicherort überträgt. Dieser führt dann die Bildung der Prüfsumme über die sicher hinterlegten verschlüsselten biometrischen Daten fort und überträgt das Ergebnis zur weiteren Verarbeitung an den Prüfer zurück.

### 4. Ausführungsbeispiel eines erfindungsgemäßen Verfahrens

Ein weiteres Ausführungsbeispiel eines erfindungsgemäßen Verfahren könnte wie das erste und das zweite Ausführungsbeispiel ausgestaltet sein, jedoch die folgenden Änderungen aufweisen:

Die Signaturerstellungseinheit 111 verfügt über eine geheime Symbolfolge. Die Signaturerstellungseinheit 111 generiert einen Signaturerfassungsvorgang-Zufallswert 106 und dieser Signaturerfassungsvorgang-Zufallswert 106 wird mit der in der Signaturerstellungseinheit 111 gespeicherten geheimen Symbolfolge 107 kombiniert. Dieser kombinierte Wert aus geheimer Symbolfolge 107 und dem Signaturerfassungsvorgang-Zufallswert 106 wird nun zur Verschlüsselung der erfassten biometrischen Daten in der Signaturerstellungseinheit 111 verwendet, bevor die verschlüsselten Daten von der Signaturerstellungseinheit 111 an die datenverarbeitende Vorrichtung übertragen werden.

Der guten Ordnung halber sei angemerkt, dass die Kombination der geheimen Symbolfolge mit dem Signaturerfassungsvorgang-Erfassungszufallswert, der letztlich eine zufällige Symbolfolge sein kann, entweder durch Verknüpfung der beiden oder durch eine Kombination (z.B. eine und/oder Verknüpfung) erfolgen kann. Es wäre auch denkbar den Signaturerfassungsvorgang-Zufallswert mit der geheimen Symbolfolge zu verschlüsseln oder die geheime Symbolfolge mit dem Signaturerfassungsvorgang-Zufallswert zu verschlüsseln und das Ergebnis dieser symmetrischen Verschlüsselung zu verwenden.

### 5. Ausführungsbeispiel eines erfindungsgemäßen Verfahrens

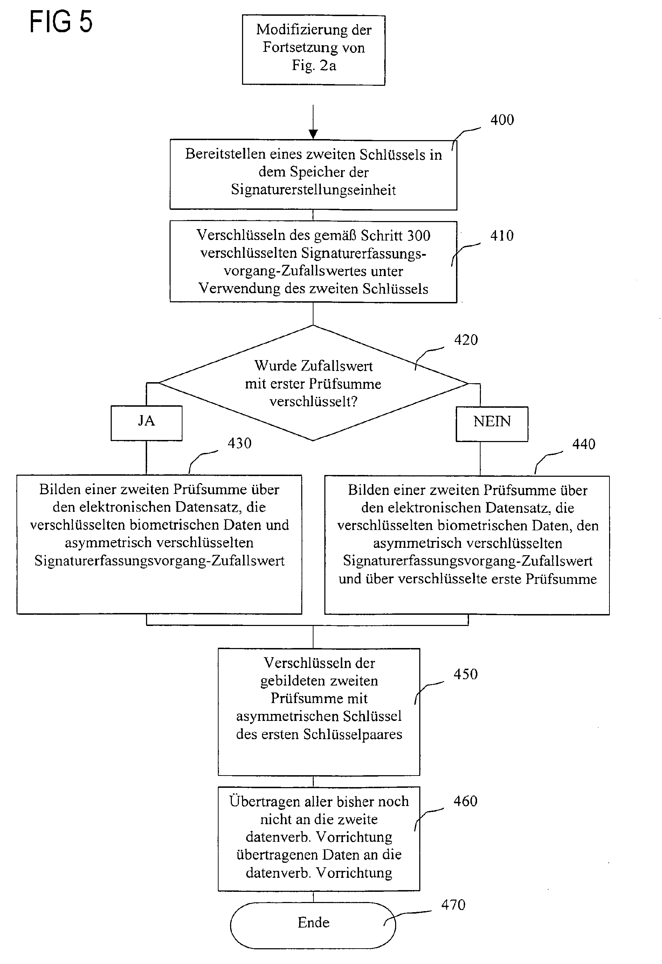

Ein fünftes Ausführungsbeispiel eines Verfahrens der vorliegenden Erfindung umfasst die Verfahrensschritte 200-320 des ersten oder zweiten Ausführungsbeispiels und die nachfolgenden Verfahrensschritte, sieher hierzu auch Fig. 5:

Die Signaturerstellungseinheit 111 verfügt über einen zweiten asymmetrischen Schlüssel zur asymmetrischen Verschlüsselung. Dieser zweite asymmetrische Schlüssel ist in dem von außerhalb der Signaturerstellungseinrichtung 111 nicht auslesbaren Speicher gespeichert, Schritt 400.

Gemäß Schritt 410 wird in der Signaturerstellungseinheit 111 nun der mit der Prüfsumme aus Schritt 330 symmetrisch verschlüsselte Signaturerfassungsvorgang-Zufallswert unter Verwendung des zweiten Schlüssels verschlüsselt.

Dann wird erneut eine zweite Prüfsumme gebildet, Schritt 430. Diese zweite Prüfsumme wird über den elektronischen Datensatz, die verschlüsselten biometrischen Daten und den asymmetrisch verschlüsselten Signaturerfassungsvorgang-Zufallswert gebildet.

### Sofern der asymmetrisch verschlüsselte

Signaturerfassungsvorgang-Zufallswert nicht zuvor mit der ersten Prüfsumme verschlüsselt wurde, Abfrage 420, sondern diese erste Prüfsumme selbst separat verschlüsselt vorliegt, wird die zweite Prüfsumme zudem auch noch über die verschlüsselte erste Prüfsumme gebildet, Schritt 440.

Die Bildung dieser zweiten Prüfsumme kann analog zur Bildung der ersten Prüfsumme entweder in der Signaturerstellungseinheit 111 oder in einer zweiten Einrichtung wie z.B. einem Computer erfolgen. Auch diese zweite Prüfsumme könnte, wie zuvor angedeutet, auf der Signaturerstellungseinheit 111 angezeigt werden und ggf. einer "Lesebestätigung" benötigen.

Die in Schritt 430 oder 440 gebildete zweite Prüfsumme wird nun mit dem asymmetrischen Schlüssel 122 oder 123 des ersten asymmetrischen Schlüsselpaares verschlüsselt, Schritt 450.

Alle bisher noch nicht an die zweite datenverarbeitende Vorrichtung 109 übertragenen Daten, also zumindest die verschlüsselte zweite Prüfsumme, werden nun im Schritt 460 an die datenverarbeitende Vorrichtung 109 übertragen 109.

Da in diesem Ausführungsbeispiel der vorliegenden Erfindung der Schlüssel eines zweiten asymmetrischen Schlüsselpaares zur Sicherung der biometrischen Daten verwendet wird, sollte dieser in nicht von außen auslesbarer Form in der Signaturerstellungseinheit 111 gespeichert sein. Der Schlüssel des ersten asymmetrischen Schlüsselpaares, welcher hier nur zur Verschlüsselung der zweiten Prüfsumme verwendet wird, könnte sich sowohl in der Signaturerstellungseinheit 111 als auch, mit geringerer Sicherheit, aber zur Beschleunigung des Erfassungsvorganges, auf der datenverarbeitenden Vorrichtung 109 befinden. In letzterem Fall würde die Verschlüsselung in der datenverarbeitenden Vorrichtung 109 oder einem hiermit verbundenen weiteren Computer erfolgen können.

Es sei angemerkt, dass die Ausdrücke "erstes und zweites asymmetrisches Schlüsselpaar" nur zur Differenzierung der verschiedenen Schlüsselpaare benutzt wird. Ob es sich bei einem Schlüsselpaar um ein "erstes" oder ein "zweites" Paar handelt, hat jedoch keinerlei technische Auswirkungen.

### 6. Ausführungsbeispiel eines erfindungsgemäßen Verfahrens

Ein weitere beispielhafte Abwandlung der ersten und zweiten Ausführungsbeispiele könnte wie folgt gestaltet sein.

Die Signaturerstellungseinheit 111 verfügt über einen asymmetrischen Schlüssel 122 oder 123 eines ersten asymmetrischen Schlüsselpaares 101. Die Signaturerstellungseinheit 111 generiert einmalig, z.B. bei der ersten Aktivierung, oder periodisch, z.B. einmal monatlich, selbst eine geheime Symbolfolge 107. Die geheime Symbolfolge wird nicht auslesbar in dem Speicher der Signaturerstellungseinheit 111 abspeichert. Zudem wird diese geheime Symbolfolge nach deren Generierung mit dem zuvor erwähnten asymmetrischen Schlüssel des ersten asymmetrischen Schlüsselpaares verschlüsselt und dieses Ergebnis wird auslesbar abspeichert und bei jeder Erfassung gemeinsam mit den anderen Daten übertragen.

Anschließend verwendet die Signaturerstellungseinheit 111 die geheime Symbolfolge 107 zur Verschlüsselung des mit der Prüfsumme symmetrisch verschlüsselten Signaturerfassungsvorgang-Zufallswertes. Alternativ verwendet die Signaturerstellungseinheit 111 die geheime Symbolfolge 107 zur Verschlüsselung des Signaturerfassungsvorgang-Zufallswertes.

### 7. Ausführungsbeispiel eines erfindungsgemäßen Verfahrens

Das Verfahren gemäß dem Ausführungsbeispiel 6 kann dann wie in gemäß den Ausführungsbeispielen 1 und 2 fortgeführt werden, oder es kann mit der Bildung einer zweiten Prüfsumme begonnen werden. Des würde wie folgt aussehen:

Es wird erneut eine Prüfsumme gebildet. Diese Prüfsumme wird über den elektronischen Datensatz, die verschlüsselten biometrischen Daten und den verschlüsselten Signaturerfassungsvorgang-Zufallswert gebildet. Sofern der Signaturerfassungsvorgang-Zufallswert nicht mit der ersten Prüfsumme verschlüsselt wurde, sondern diese erste Prüfsumme selbst separat verschlüsselt vorliegt, wird die zweite Prüfsumme zudem auch noch über die verschlüsselte erste Prüfsumme gebildet. Die Bildung dieser zweiten Prüfsumme kann analog zur Bildung der ersten Prüfsumme entweder in dem Signaturerstellungseinheit 111 oder in einer zweiten Einrichtung wie z.B. einem Computer erfolgen. Auch diese zweite Prüfsumme könnte auf der Signaturerstellungseinheit 111 angezeigt werden und ggf. eine "Lesebestätigung" benötigen.

Die gebildete zweite Prüfsumme wird nun mit dem asymmetrischen Schlüssel 122 oder 123 eines zweiten asymmetrischen Schlüsselpaares verschlüsselt.

Alle bisher noch nicht an die zweite Vorrichtung 109 übertragenen Daten, also zumindest die verschlüsselte zweite Prüfsumme, werden nun an die datenverarbeitende Vorrichtung 109 übertragen.

Der guten Ordnung halber sei angemerkt, dass das verwendete asymmetrische Schlüsselpaar über seine ID-Nummer oder über ein Zertifikat wie z.B. dem Inhaber der Signaturerstellungseinheit bzw. der Signaturerstellungseinheit selbst (z.B. dessen Serienummer) zugeordnet sein könnte. Dies gilt auch für andernorts verwendeten asymmetrische Schlüsselpaare. Stand der Technik ist, dass die Richtigkeit einer solchen Zuordnung eines asymmetrischen Schlüssels mit Hilfe eines Zertifikates durch den Herausgeber/Aussteller des Zertifikates (z.B. des Herstellers oder einer Certificate Authority) beglaubigt bzw. nachvollziehbar sein kann.

### 8. Ausführungsbeispiel eines erfindungsgemäßen Verfahrens

Die zuvor beschriebenen Verfahren können möglicherweise wie folgt abgewandelt werden. Voraussetzung ist, dass die Signaturerstellungseinheit 111 über einen Darstellungsbereich verfügt, der ausreicht, den darstellbaren Inhalt des elektronischen Datensatzes 100 zur Anzeige bringen. Handelt es sich um einen längeren elektronischen Datensatz wie z.B. ein mehrseitiges elektronisches Dokument, wäre es auch denkbar, dass die Signaturerstellungseinheit 111 Steuerelemente besitzt, um in dem langen Datensatz zu manövrieren, z.B. Scrollen, und/oder durch einen mehrseitigen Datensatz zu blättern und/oder dessen Anzeigegröße zu variieren, wie z.B. Zoomen.

Die beschriebenen Verfahren würden nach dieser beispielhaften Ausführungsform um die Erstellung eines darstellbaren Inhaltes des elektronischen Datensatzes auf der datenverarbeitenden Vorrichtung 109 sowie dessen Übertragung auf die Signaturerstellungseinheit 111 erweitert sein. Ferner würden sich alle Prüfsummenbildungen der Verfahren nur noch auf den darstellbaren Inhalt beziehen und in der Signaturerstellungseinheit 111 selbst ausgeführt werden.

### 9. Ausführungsbeispiel eines erfindungsgemäßen Verfahrens

Die zuvor beschriebenen Verfahren können möglicherweise wie folgt abgewandelt werden. Insbesondere könnte die Signaturerstellungseinheit 111 zusätzlich folgende Funktionalitäten aufweisen.

Die Signaturerstellungseinheit 111 ist in der Lage, aus den von ihr erfassten biometrischen Daten, vor deren Verschlüsselung, einzelne Werte zu extrahieren und diese so miteinander zu verrechnen, zu maskieren und/oder aus ihnen weitere und/oder neue Werte abzuleiten. Damit erzeugt die Signaturerstellungseinheit 111 einen Datensatz bzw. einen BioRef 108 der in keinster Weise dazu geeignet ist, daraus die biometrischen Daten zu rekonstruieren, der aber ausreichend ist, um ihn später mit anderen BioRefs vergleichen zu können und anhand deren Ähnlichkeit eine Aussage darüber zu machen, ob die verglichenen BioRefs zu biometrischen Datensätzen derselben Person gehören oder nicht. Diesen BioRef 108 kann die Signaturerstellungseinheit 111 dann unverschlüsselt zu einer anderen Vorrichtung.

Die Erzeugung eines solchen BioRef kann entweder standardmäßig bei jeder Erfassung geschehen, oder dass es kann sich dabei um eine optionale Funktionalität handelt, die z.B. von der zweiten Vorrichtung (z.B. dem Computer) vor dem Start einer Erfassung aktiviert werden kann, wenn sie benötigt wird. Je nach Art und Umfang der zur Erstellung eines BioRefs benötigten Rechenleistung im Signaturerstellungseinheit könnte eine solche ein- und ausschaltbare Funktionalität den Erfassungsvorgang beschleunigen, wenn keine zusätzliche automatische Identifikation des Unterzeichners (mittels des Vergleiches mehrerer BioRefs) benötigt wird.

### 10. Ausführungsbeispiel eines erfindungsgemäßen Verfahrens

Die EU-Richtlinie zur elektronischen Signatur (1999/93/EG / EG-Signaturrichtlinie - im Folgenden EU-Richtlinie genannt) definiert drei Formen der elektronischen Signatur:
(1) die (einfache) elektronische Signatur,
(2) die fortgeschrittene elektronische Signatur, und
(3) die fortgeschrittene elektronische Signatur, welche auf einem qualifiziertem Zertifikat beruht und in einer sicheren Signaturerstellungseinheit erzeugt wurde, im Folgenden auch als qualifizierte elektronische Signatur oder QES bezeichnet.

Da QES-Signaturen immer die Zuordnung eines Signaturschlüssels wie z.B. eines Private-Key zu einer unterzeichnenden Person durch eine vertrauenswürdige Instanz (z.B. Trustcenter) verlangt, ist diese Form der e-Signatur nicht für den Betrieb am Schalter oder anderen Stellen im "Face to Face" Geschäft geeignet. Grund hierfür ist, dass der Unterzeichner in der Regel nicht im Besitz eines solchen qualifizierten Zertifikate ist und dies auf Grund der gesetzlichen Sicherheitsvermutung einer QES-Signatur, die in der Regel für den Unterzeichner einer Beweislastumkehr zu seinen Ungunsten gleichkommt, auch hier nicht anwenden würde. Daher haben sich sogenannte handgeschriebene elektronische Signaturen in vielen Marktbereichen durchgesetzt. Eine handgeschriebene elektronische Signatur verwendet das biometrische Merkmal der erfassten händischen Unterschrift als Identifikationsmerkmal des Unterzeichners. Dieses biometrische Merkmal kann jeder Unterzeichner ohne eine bestimmte technische Einrichtung wie eine Smartcard, eine Registrierung, Folgekosten und rechtliche Nachteile leisten. Dieses biometrische Merkmal stellt jedoch keinen asymmetrischen kryptographischen Schlüssels dar und kann somit nicht als qualifiziertes Zertifikat ausgegeben werden. Handgeschriebene elektronische Signaturen können daher lediglich einfache oder fortgeschrittene e-Signaturen nach der EU-Richtlinie sein.

Obwohl die Formulierung zur fortgeschrittenen elektronischen Signatur zunächst völlig technologieneutral zu sein scheint, offenbart sich, dass bei der Verwendung fortgeschrittener elektronischer Signaturen wohl immer asymmetrische kryptographische Verschlüsselungsalgorithmen notwendig sind. Daraus resultiert in der Praxis, dass zur Erstellung einer fortgeschrittenen elektronischen Signatur "einmalige Daten" verwendet werden müssen. Zwar wurde die Verwendung eines privaten Schlüssels, sog. Private Key, hier nur exemplarisch erwähnt, die Einmaligkeit schließt jedoch die Verwendung symmetrischer Schlüssel aus, da in diesem Fall sowohl für die "Erstellung" als auch für die Prüfung ein identischer Schlüssel benötigt werden würde. Und somit würde es sich nicht um einen einmaligen Schlüssel handeln, der nur in der Signaturerstellungseinheit existiert. Dass der Unterzeichner im "Besitz" einer Signaturerstellungseinheit sein muss, bedeutet jedoch nicht, dass er gleichzeitig deren Eigentümer sein muss. Juristisch gesehen kann ein Besitz auch temporär durch eine zeitweilige "Überlassung" stattfinden. So erfüllt ein Signatursystem, das einen einmaligen privaten Schlüssel besitzt und einer Peron zur elektronischen Signatur überlassen wird, durchaus die Anforderung, dass sich die Signaturerstellungseinheit mit den einmaligen Signaturerstellungsdaten zum Zeitpunkt der Unterzeichnung im Besitz des Unterzeichners befindet. Im Falle eines solchen Systems, das ggf. verschiedenen Personen zur Unterzeichnung überlassen wird (d.h. einem wechselnden Besitz unterliegt), mag es keinen Sinn machen, die tatsächliche Identität des Unterzeichners an den Signaturerstellungsdaten wie dem privaten Schlüssel festzumachen. Dies wird bei der Verwendung fortgeschrittener Signaturen auch nicht gefordert. Eine solche Zuordnung des privaten Schlüssels zur Identität des Unterzeichners wird lediglich bei den fortgeschrittenen elektronischen Signaturen, die auf einem qualifizierten Zertifikat beruhen, im Folgenden als qualifizierte elektronische Signatur bezeichnet, gefordert. Der Verwendung eines biometrischen Identifikationsmerkmal wie z.B. der handgeschriebenen Unterschrift im Rahmen einer fortgeschrittenen elektronischen Signatur ist also durchaus möglich, sofern in der Signaturerstellungseinheit einmalige Signaturerstellungsdaten, also z.B. ein einmaliger Private Key, zum Einsatz kommen.

In der Praxis bestehen die handgeschriebenen elektronischen Signaturen daher gelegentlich aus einer Kombination zweier Signaturen. Zum einen die so genannte elektronische Signatur, die sich aus den erfassten biometrischen Daten der händischen Unterschrift (Identifikationsmerkmal) und deren Kombination mit einer ersten Prüfsumme des Dokumentes (z.B. durch gemeinsame Verschlüsselung von Prüfsumme und biometrischen Daten) ergibt, diese Art von Signatur mag auch als biometrische Signatur bezeichnet werden. Zum anderen eine digitale Signatur, die sich aus der Signierung, also der Verschlüsselung, einer zweiten Dokumentenprüfsumme mit einem Private Key ergibt.

Die biometrische Signatur kann jedoch nur geprüft werden, indem die erste Prüfsumme und somit auch die biometrischen Daten entschlüsselt werden. Die Prüfung der Zugehörigkeit der biometrischen Daten zu einer Person ist jedoch nur im Rahmen einer Prüfung durch einen Schriftsachverständigen sinnvoll möglich und wird in der Praxis - analog zu einer Unterschrift auf Papier - zumeist nur in gerichtlichen Auseinandersetzungen benötigt. In allen andern Fällen reicht das sichtbare Abbild der Unterschrift aus. Daher sollte zur Prüfung der Dokumentenintegrität, d.h. der Prüfung, ob das Dokument manipuliert wurde, keine Notwendigkeit bestehen, die biometrischen Daten zu entschlüsseln. Denn die biometrischen Daten könnten dann als eine Art Blanko-Unterschrift missbraucht werden, z.B. durch Kopieren unter ein anderes Dokument. Für diesen Zweck kann die zusätzliche digitale Signatur verwendet werden.

In der Praxis könnten sich auf Grund dieser Umstände verschiedene Probleme ergeben. So kann es problematisch sein sicherzustellen, dass die Verbindung der biometrischen Daten nicht von Ihrer Verknüpfung mit dem Dokument getrennt werden können, d.h. von der ersten Prüfsumme, oder auf andere Art und Weise von Unbefugten missbraucht bzw. entschlüsselt werden können. Selbst wenn die biometrischen Daten bereits im Erfassungsgerät verschlüsselt und mit der Prüfsumme des Dokumentes verknüpft wurden, könnte vielleicht dieser Schlüssel auslesbar sein, anderweitig erzeugt sein oder bereits kopiert worden sein. Ferner könnte das Problem auftreten, dass der Hersteller der Signaturlösung nicht mehr existiert und damit eventuell die biometrischen Daten zu Überprüfungszwecken nicht mehr entschlüsselt werden können. Es mag sich außerdem das Problem ergeben, dass der private Schlüssel der digitalen Signatur nicht gegen Missbrauch oder Diebstahl gesichert ist. Weiter mag es problematisch sein, wie ein Prüfer der digitalen Signatur feststellen soll, ob der Prüfschlüssel, d.h. das Zertifikat, tatsächlich zu einem privaten Schlüssel einer vertrauenswürdigen Signaturerstellungseinheit gehört, d.h. es sich nicht einfach um einen vom Manipulator selbst erzeugten Signaturschlüssel nebst Zertifikat handelt. Schließlich stellt sich das Problem, wie bei einer fortgeschrittenen e-Signatur sichergestellt werden kann, dass der private Schlüssel zur digitalen Signatur einmalig ist, also nur in einer Signaturerstellungseinheit existiert.

Ein der vorliegenden Erfindung zugrunde liegendes technisches Problem mag darin bestehen, eines oder mehrere der genannten Probleme zu beseitigen oder zumindest etwas besser zu lösen.

Gemäß einem weiteren Aspekt der vorliegenden Erfindung wird ein Verfahren zur Herstellung einer Signaturerstellungseinheit offenbart. Bei diesem beispielhaften Verfahren verfügt der Hersteller der Signaturerstellungseinheit über einen öffentlichen Schlüssel eines ersten Schlüsselpaares. Dieses erste Schlüsselpaar wurde dabei von einer externen, vertrauenswürdigen Stelle wie z.B. einem Notar erzeugt. Die externe Stelle mag also eine Stelle sein, zu der auch der Hersteller keinen Zugang hat. Der öffentliche Schlüssel dieses ersten Schlüsselpaares soll später in der Signaturerstellungseinheit bei der Verschlüsselung der biometrischen Daten verwendet werden. Der private Schlüssel dieses ersten Schlüsselpaares ist somit sicher bei der vertrauenswürdigen Stelle hinterlegt und wird von dieser nur zur Entschlüsselung einzelner biometrischer Daten einem Sachverständigen zur Verfügung gestellt, und auch nur dann, wenn eine elektronische Signatur, die mit der Signaturerstellungseinheit erstellt wurde, zu Beweiszwecken überprüft werden soll. Die vertrauenswürdige Stelle kann den privaten Schlüssel auch dann noch zu Prüfzwecken bereitstellen, wenn der Hersteller der Signaturerstellungseinheit nicht mehr existieren sollte. Weder der Hersteller noch der Betreiber der Signaturerstellungseinheit erhalten diesen privaten Schlüssel. Jede Verwendung dieses Schlüssels wird von der vertrauenswürdigen Stelle genauestens protokolliert. Ferner wird eine Signaturerstellungseinheit mit einem zumindest in Teilen nicht auslesbaren Speicher bereitgestellt. Der von der vertrauenswürdigen Stelle erzeugte öffentliche Schlüssel wird in die Signaturerstellungseinheit übertragen. Des Weiteren wird eine datenverarbeitende Vorrichtung bereitgestellt, die nicht mit der Außenwelt wie z.B. dem Internet verbunden ist. Diese datenverarbeitende Vorrichtung ist dazu ausgebildet, ein zweites asymmetrisches Schlüsselpaar zu erzeugen und dieses zweite Schlüsselpaar mit einem weiteren asymmetrischen Schlüssel wie z.B. einem so genannten Root-Zertifikat zu signieren. Das so erzeugte zweite Schlüsselpaar, wenigstens jedoch der private Schlüssel dieses zweiten Schlüsselpaares wird in den Speicher der Signaturerstellungseinheit geschrieben. Dabei wird der private Schlüssel dieses zweiten Schlüsselpaares in den von außerhalb der Signaturerstellungseinrichtung nicht auslesbaren Speicherbereich geschrieben. Sobald der private Schlüssel dieses zweiten Schlüsselpaares in den von außerhalb der Signaturerstellungseinrichtung nicht auslesbaren Speicherbereich geschrieben ist, wird das auf der datenverarbeitenden Vorrichtung erzeugte und signierte Schlüsselpaar, mindestens jedoch der private Schlüssel dieses zweiten Schlüsselpaares vernichtet, vorzugsweise umgehend nach dem die Abspeichervorgang beendet wurde. Das Vernichten kann z.B. durch Freigabe oder Löschen des Speichers in der datenverarbeitenden Vorrichtung erfolgen.

Ein Vorteil dieses Vorgehensweise kann sein, dass sichergestellt werden kann, dass die Verbindung der biometrischen Daten nicht von Ihrer Verknüpfung mit dem Dokument getrennt werden können, d.h. von der ersten Prüfsumme, oder sonst wie von Unbefugten missbraucht oder entschlüsselt werden können. Da bei der Verschlüsselung der biometrischen Daten, wie hierin beschrieben, der öffentliche Schlüssel des z.B. notariell erzeugten ersten Schlüsselpaares im Prozessor der Signaturerstellungseinheit zum Einsatz kommt, finden sich diese äußerst sensiblen Daten niemals in entschlüsselter Form auf der unsicheren Umgebung einer datenverarbeitenden Vorrichtung wie einem Computer, d.h. z.B. in einem Arbeitsspeicher. Der private Schlüssel dieses zweiten Schlüsselpaares ist sicher bei der vertrauenswürdigen Stelle hinterlegt und wird von dieser nur zur Entschlüsselung einzelner biometrischer Daten im Streitfall einem Sachverständigen zur Verfügung gestellt.

Ein weiterer Vorteil der vorliegenden Erfindung mag sein, dass sichergestellt ist, dass die biometrischen Daten in berechtigten Fällen auch dann entschlüsselt und geprüft werden können, wenn es den Hersteller der Signaturerstellungseinheit nicht mehr gibt, da z.B. der Notar den privaten Schlüssel sicher verwahrt und diesen im Falle einer Prüfung immer zur Verfügung stellen kann.

Bei der vorliegenden Erfindung kann sichergestellt werden, dass der private Schlüssel der digitalen Signatur nicht missbraucht oder entwendet wurde, in dem z.B. der Hersteller in der Produktion über ein Inselsystem verfügt, das getrennt vom restlichem Firmennetzwerk und dem Internet beim Endtest jeder Signaturerstellungseinheit ein zweites Schlüsselpaar generiert und den privaten Schlüssel in den nicht auslesbaren Speicher des Prozessors schreibt. Dadurch, dass anschließend dieses Schlüsselpaar sofort wieder gelöscht wird, d.h. es nur noch in der Signaturerstellungseinheit existiert, ist der private Schlüssel vor Missbrauch geschützt, kann aber von der Signaturerstellungseinheit selbst benutzt werden.

Mit Hilfe der vorliegenden Erfindung kann ein Prüfer der digitalen Signatur feststellen, dass der Prüfschlüssel, d.h. das Zertifikat, tatsächlich zu einem privaten Schlüssel einer vertrauenswürdigen Signaturerstellungseinheit gehört. Da das Prüfzertifikat wie z.B. ein Public Key Zertifikat vom Root-Zertifikat, das nur auf dem Produktionssystem des Herstellers existiert, signiert wurde, muss der Prüfer des elektronisch signierten Dokumentes nur die Zugehörigkeit des Zertifikates, also den öffentlichen Schlüssels des zweiten Schlüsselpaares zum Root-Zertifikat des Herstellers prüfen. Dies kann beispielsweise durch Einspielen des öffentlichen Schlüssels des Root-Zertifikates in eine entsprechend Software zur Signaturprüfung wie z.B. Adobe Reader/Acrobat erfolgen, um festzustellen, ob es sich um einen Signaturschlüssel einer entsprechenden Signaturerstellungseinheit handelt, der ja nicht ausgelesen und somit nicht missbraucht werden konnte.

Da erfindungsgemäß eine Signaturerstellungseinheit, d.h. eine Hardware, im Gegensatz zu Software wie z.B. ein Softwarezertifikat nicht einfach durch kopieren vervielfältigt werden kann und das Produktionssystem des Herstellers für jede Signaturerstellungseinheit ein neues Schlüsselpaar generiert, also z.B. das Schlüsselpaar nicht aus einem vorhandenen Schlüsselbestand entnommen wird, ist die Einmaligkeit des Schlüssels direkt mit der Einmaligkeit der Hardware verknüpft.

Abschließend ist anzumerken, dass ein oder mehrere Verfahrensschritte eines offenbarten Ausführungsbeispiels der vorliegenden Erfindung auch mit einem oder mehreren Verfahrensschritten eines anderen offenbarten Ausführungsbeispiels der vorliegenden Erfindung kombiniert werden kann, wodurch einem Durchschnittsfachmann der vorliegenden Beschreibung weitere Ausführungsbeispiele der Erfindung offenbart sind. Gleiches gilt selbstverständlich auch für ein oder mehrere Merkmale der offenbarten Ausführungsbeispiele einer Signaturerstellungseinheit oder eines Computersystems.

## Patentansprüche

1. Verfahren zur elektronischen Signatur eines elektronischen Datensatzes (100), mit wenigstens folgenden Schritten:
a) Bereitstellen einer Signaturerstellungseinheit (111) mit einem von außerhalb der Signaturerstellungseinheit (111) nicht auslesbaren Speicher (112), in dem ein erster Schlüssel (107; 122, 123) abgespeichert ist, wobei die Signaturerstellungseinheit (111) dazu ausgebildet ist, eine bidirektionale Datenkommunikation mit einer separaten, datenverarbeitenden Vorrichtung (109) zu führen und ein Verschlüsselungsverfahren unter Verwendung des in der Signaturerstellungseinheit (111) abgespeicherten ersten Schlüssels (107; 122, 123) durchzuführen,
b) Bereitstellen einer von der Signaturerstellungseinheit (111) räumlich getrennten, datenverarbeitenden Vorrichtung (109), die dazu ausgebildet ist, eine bidirektionale Datenkommunikation mit der Signaturerstellungseinheit (111) zu führen und einen mittels der Signaturerstellungseinheit (111) zu unterzeichnenden elektronischen Datensatz (100) bereit zu stellen,
c) Erfassen von wenigstens einem biometrischen Merkmal einer natürlichen Person, die den elektronischen Datensatz (100) elektronisch zu unterzeichnen hat, mittels der Signaturerstellungseinheit (111),
d) Erzeugen eines elektronischen biometrischen Datensatzes aus dem wenigstens einen erfassten biometrischen Merkmal in der Signaturerstellungseinheit (111),
e) Erzeugen eines Signaturerfassungsvorgang-Zufallswertes (106) in der Signaturerstellungseinheit (111),
f) Verschlüsseln des erzeugten biometrischen Datensatzes in der Signaturerstellungseinheit (111) unter Verwendung des erzeugten Signaturerfassungsvorgang-Zufallswertes (106),
g) Übertragen der verschlüsselten biometrischen Daten an die datenverarbeitende Vorrichtung (109), Bilden einer ersten Prüfsumme (115) über die verschlüsselten biometrischen Daten und den elektronischen Datensatz (100) in der datenverarbeitenden Vorrichtung (109) und Übertragen der gebildeten ersten Prüfsumme (115) von der datenverarbeitenden Vorrichtung (109) an die Signaturerstellungseinheit (111),
oder
Übertragen des elektronischen Datensatzes (100) von der datenverarbeitenden Vorrichtung (109) an die Signaturerstellungseinheit (111) und Bilden einer ersten Prüfsumme (115) über die verschlüsselten biometrischen Daten und den elektronischen Datensatz (100) in der Signaturerstellungseinheit (111),
h) Verschlüsseln des erzeugten Signaturerfassungsvorgang-Zufallswertes (106) in der Signaturerstellungseinheit (111) unter Verwendung der ersten Prüfsumme (115),
i) Verschlüsseln des Ergebnisses aus Verfahrensschritt h) unter Verwendung des in der Signaturerstellungseinheit (111) gespeicherten ersten Schlüssels (107; 122, 123), und
j) Übertragen des Ergebnisses der Verschlüsselung gemäß Verfahrensschritt i) an die datenverarbeitende Vorrichtung (109) und, falls noch nicht im Verfahrensschritt g) erfolgt, Übertragen der verschlüsselten biometrischen Daten an die datenverarbeitende Vorrichtung (109).

2. Verfahren nach Anspruch 1, bei dem die Verfahrensschritte h)-j) wie folgt abgewandelt werden:
h) Verschlüsseln der ersten Prüfsumme (115) in der Signaturerstellungseinheit (111) unter Verwendung des erzeugten Signaturerfassungsvorgang-Zufallswertes (106),
i) Verschlüsseln des Signaturerfassungsvorgang-Zufallswertes (106) unter Verwendung des in der Signaturerstellungseinheit (111) gespeicherten ersten Schlüssels (107; 122, 123), und
j) Übertragen des Ergebnisses der Verschlüsselungen gemäß den Verfahrensschritten h) und i) an die datenverarbeitende Vorrichtung (109), und, falls noch nicht im Verfahrensschritt g) erfolgt, Übertragen der verschlüsselten biometrischen Daten an die datenverarbeitende Vorrichtung (109).

3. Verfahren nach einem der voranstehenden Ansprüche, bei dem:
in dem nicht auslesbaren Speicher der Signaturerstellungseinheit (111) ein zweiter Schlüssel abgespeichert ist, und
die Verschlüsselung gemäß Schritt f) unter Verwendung einer Kombination des Signaturerfassungsvorgang-Zufallswertes (106) und des abgespeicherten zweiten Schlüssels erfolgt.

4. Verfahren nach Anspruch 3, mit folgenden weiteren Verfahrensschritten:
einmaliges oder periodisches Erzeugen des zweiten Schlüssels in der Signaturerstellungseinheit (111), und
Abspeichern des erzeugten zweiten Schlüssels in dem nicht auslesbaren Speicher der Signaturerstellungseinheit (111).

5. Verfahren nach einem der Ansprüche 1-4, bei dem der in der Signaturerfassungseinrichtung (111) abgespeicherte erste Schlüssel (122, 123) ein asymmetrischer Schlüssel eines ersten asymmetrischen Schlüsselpaares (101) ist.

6. Verfahren nach einem der Ansprüche 1-4, bei dem der in der Signaturerfassungseinrichtung (111) abgespeicherte erste Schlüssel (107) ein symmetrischer Schlüssel ist.

7. Verfahren nach Anspruch 6, bei dem:
ein asymmetrischer Schlüssel (122, 123) eines ersten asymmetrischen Schlüsselpaares (101) in dem Speicher der Signaturerstellungseinheit (111) abgespeichert ist,
die Signaturerstellungseinheit (111) dazu ausgebildet ist, ein asymmetrisches Verschlüsselungsverfahren unter Verwendung dieses asymmetrischen Schlüssels (122, 123) auszuführen, und dazu ausgebildet ist, einmalig oder periodisch oder auf Anforderung den ersten Schlüssel (107) zu generieren und mit dem asymmetrischen Schlüssel (122, 123) des ersten asymmetrischen Schlüsselpaares (101) zu verschlüsseln und das Ergebnis dieser asymmetrischen Verschlüsselung auslesbar in der Signaturerstellungseinheit (111) abzuspeichern und bei jedem Signaturerfassungsvorgang gemeinsam mit anderen Daten an die datenverarbeitende Vorrichtung (109) zu übertragen, und
der erste Schüssel (107) ein von außerhalb der Signaturerstellungseinheit (111) nicht auslesbarer und unverschlüsselt in dem Speicher der Signaturerstellungseinheit (111) abgespeicherter geheimer Schlüssel ist.

8. Verfahren nach einem der voranstehenden Ansprüche, bei dem:
die Bildung der ersten Prüfsumme (115) in der Signaturerstellungseinheit (111) ausgeführt wird und die erste Prüfsumme sich auf einen darstellbaren Inhalt (112) des elektronischen Datensatzes (100) beschränkt, der auf einem Darstellungsdisplay (113) der Signaturerstellungseinheit (111) angezeigt werden kann, und
dieser darstellbare Inhalt (112) gemeinsam mit oder in dem elektronischen Datensatz, aus dem der darstellbare Inhalt erzeugt wurde, gespeichert wird, so dass gegebenenfalls dieser darstellbare Inhalt zum Vergleich wieder dargestellt werden kann und erneut eine Prüfsummenbildung hierüber erfolgen kann.

9. Signaturerstellungseinheit (111) mit:
- einem von außerhalb der Signaturerstellungseinheit (111) nicht auslesbaren Speicher (112), in dem ein Schlüssel (107; 122, 123) abgespeichert ist,
- einer Datenkommunikationseinrichtung (116), die dazu ausgebildet ist, eine bidirektionale Datenkommunikation mit einer separaten, datenverarbeitenden Vorrichtung (109) zu führen,
- einer Verschlüsselungseinrichtung (117), die dazu ausgebildet ist, ein Verschlüsselungsverfahren unter Verwendung des in der Signaturerstellungseinheit (111) abgespeicherten Schlüssels (107; 122, 123) durchzuführen,
- einer Erfassungseinrichtung (118), die dazu ausgebildet ist, wenigstens ein biometrisches Merkmal einer natürlichen Person, die den elektronischen Datensatz (100) elektronisch zu unterzeichnen hat, zu erfassen und hieraus einen elektronischen biometrischen Datensatz zu erzeugen,
- einer Signaturerfassungsvorgang-Zufallswerterzeugungseinrichtung (119),
- einer Verschlüsselungseinrichtung (117), die dazu ausgebildet ist, den erzeugten biometrischen Datensatz unter Verwendung des erzeugten Signaturerfassungsvorgang-Zufallswertes (106) zu verschlüsseln,
- einer Prüfsummenbildungseinrichtung (120), die dazu augebildet ist, eine Prüfsumme (115) über die verschlüsselten biometrischen Daten und den elektronischen Datensatz (100) zu bilden,
- einer Verschlüsselungseinrichtung (117), die dazu ausgebildet ist, den erzeugten Signaturerfassungsvorgang-Zufallswertes (106) in der Signaturerstellungseinheit (111) unter Verwendung der ersten Prüfsumme (115) zu verschlüsseln,
- einer Verschlüsselungseinrichtung (117), die dazu ausgebildet ist, den unter Verwendung der ersten Prüfsumme (115) verschlüsselten Signaturerfassungsvorgang-Zufallswert (106) unter Verwendung des in der Signaturerstellungseinheit (111) gespeicherten ersten Schlüssels (122, 123) zu verschlüsseln.

10. Computersystem mit:
- einer datenverarbeitenden Vorrichtung (109), die dazu ausgebildet ist, mit einer Signaturerstellungseinheit (111) bidirektional zu kommunizieren, und
- einer von der datenverarbeitenden Vorrichtung (109) räumlich getrennten Signaturerstellungseinheit (111) nach Anspruch 9.

11. Computerprogramm, umfassend auf einem Computersystem (109, 111) ausführbare Anweisungen, die bewirken, dass das Computersystem (109, 111) ein Verfahren nach einem oder mehreren der Ansprüche 1-8 ausführt.

12. Computerlesbares Medium mit darauf abgespeicherten Anweisungen, die mittels eine Prozessors zur Durchführung eines Verfahrens nach einem oder mehreren der Ansprüche 1-8 ausführbar sind.

## Claims

1. A method for electronically signing an electronic dataset (100), comprising at least the following steps:
a) providing a signature generation unit (111) having a memory (112) that cannot be read out from outside the signature generation unit (111), in which memory a first key (107; 122, 123) is stored, wherein the signature generation unit (111) is formed for bi-directional data communication with a separate data processing device (109), and for carrying out an encryption method by means of the first key (107; 122, 123) stored in the signature generation unit (111),
b) providing a data processing device (109), which is spatially separated from the signature generation unit (111), and which is formed for bi-directional data communication with the signature generation unit (111), and for providing an electronic dataset (100) to be signed by means of the signature generation unit (111),
c) capturing at least one biometric feature of a natural person, which person has to electronically sign the electronic dataset (100), by means of the signature generation unit (111),
d) generating an electronic biometric dataset based on the at least one captured biometric feature in the signature generation unit (111),
e) generating a signature capture process random value (106) in the signature generation unit (111),
f) encrypting the generated biometric dataset in the signature generation unit (111) by means of the generated signature capture process random value (106),
g) transmitting the encrypted biometric data to the data processing device (109), forming a first checksum (115) over the encrypted biometric data and the electronic dataset (100) in the data processing device (109), and transmitting the formed first checksum (115) from the data processing device (109) to the signature generation unit (111),
or
transmitting the electronic dataset (100) from the data processing device (109) to the signature generation unit (111), and forming a first checksum (115) over the encrypted biometric data and the electronic dataset (100) in the signature generation unit (111),
h) encrypting the generated signature capture process random value (106) in the signature generation unit (111) by means of the first checksum (115),
i) encrypting the result of method step h) by means of the first key (107; 122, 123) stored in the signature generation unit (111), and
j) transmitting the result of the encryption according to method step i) to the data processing device (109), and, if not already carried out in method step g), transmitting the encrypted biometric data to the data processing device (109).

2. The method according to claim 1, wherein method steps h)-j) are modified as follows:
h) encrypting the first checksum (115) in the signature generation unit (111) by means of the generated signature detection process random value (106),
i) encrypting the signature detection process random value (106) by means of the first key (107; 122, 123) stored in the signature generation unit (111), and
j) transmitting the results of the encryptions according to method steps h) and i) to the data processing device (109), and, if not already carried out in method step g), transmitting the encrypted biometric data to the data processing device (109).

3. The method according to one of the preceding claims, wherein:
a second key is stored in the non-readable memory of the signature generation unit (111), and
encryption according to step f) is carried out by means of a combination of the signature detection process random value (106) and the stored second key.

4. The method according to claim 3, further comprising the following method steps:
uniquely or periodically generating the second key in the signature generation unit (111), and
storing the generated second key in the non-readable memory of the signature generation unit (111).

5. The method according to one of claims 1-4, wherein the first key (122, 123) stored in the signature detection unit (111) is an asymmetric key of a first asymmetric pair of keys (101).

6. The method according to one of claims 1-4, wherein the first key (107) stored in the signature detection unit (111) is a symmetric key.

7. The method according to claim 6, wherein:
an asymmetric key (122, 123) of a first asymmetric pair of keys (101) is stored in the memory of the signature generation unit (111),
the signature generation unit (111) is formed for carrying out an asymmetric encryption method by means of said asymmetric key (122, 123), and formed for uniquely, periodically or on request, generating the first key (107) and encrypting said first key by means of the asymmetric key (122, 123) of the first asymmetric pair of keys, and for readably storing the result of said asymmetric
encryption in the signature generation unit (111) and transmitting the same to the data processing device (109) in each signature detection process together with other data, and
the first key (107) is a secret key that is not readable from outside the signature generation unit (111) and is stored unencrypted in the memory of the signature generation unit (111).

8. The method according to one of the preceding claims, wherein:
the formation of the first checksum (115) is carried out in the signature generation unit (111), and the first checksum is confined to a displayable content (112) of the electronic dataset (100), which is displayable on a display (113), and
said displayable content (112) is stored together with the electronic dataset or in the electronic dataset based on which the displayable content has been generated, so that said displayable content may be displayed again for comparison, and a formation of a checksum over said content may be carried out again.

9. A signature generation unit (111) comprising:
- a memory (112) that is not readable from outside the signature generation unit (111), in which memory a key (107; 122, 123) is stored,
- a data communication unit (116) formed for carrying out a bi-directional data communication with a separate data processing device (109),
- an encryption unit (117) formed for carrying out an encryption method by means of the key (107; 122, 123) stored in the signature generation unit (111),
- a capture device (118) formed to capture at least one biometric feature of a natural person, which person has to electronically sign the electronic dataset (100), in order to generate an electronic biometric dataset (104) based thereon,
- a signature capture process random value generation unit (119),
- an encryption unit (117) formed for encrypting the generated biometric dataset (104) by means of the generated signature capture process random value (106),
- a checksum formation unit (120) formed for formation of a checksum (115) over the encrypted biometric data and the electronic dataset (100),
- an encryption device (117) formed for encrypting the generated signature capture process random value (106) in the signature generation unit (111) by means of the first checksum (115),
- an encryption device (117) formed for encrypting the encrypted signature capture process random value (106), which was encrypted by means of the first checksum (115), by means of the first key (122, 123) stored in the signature generation unit (111).

10. A computer system, comprising:
- a data processing device (109) formed for bi-directionally communicating with a signature generation unit (111), and
- a signature generation unit (111) according to claim 9, which is spatially separated from the data processing device (109).

11. A computer program comprising instructions that can be carried out on a computer system (109, 111), said instructions causing the computer system (109, 111) to carry out a method according to one or more of claims 1-8.

12. A computer-readable medium having instructions stored thereon, which instructions can be carried out by means of a processor for carrying out a method according to one or more of claims 1-8.

## Revendications

1. Procédé de signature électronique d'un jeu de données électroniques (100), comprenant au moins les étapes consistant à :
a) préparer une unité de création de signature (111) avec une mémoire (112) non lisible en dehors de l'unité de création de signature (111), dans laquelle mémoire un premier code (107 ; 122, 123) est mémorisé, dans lequel l'unité de création de signature (111) est conçue de manière à effectuer une communication de données bidirectionnelle avec un dispositif de traitement de données séparé (109) et à réaliser un processus de codage en utilisant le premier code (107 ; 122, 123) mémorisé dans l'unité de création de signature (111),
b) préparer un dispositif de traitement de données (109) séparé spatialement de l'unité de création de signature (111), qui est conçu pour effectuer une communication de données bidirectionnelle avec l'unité de création de signature (111) et préparer un jeu de données électroniques (100) à signer au moyen de l'unité de création de signature (111),
c) saisir au moins une caractéristique biométrique d'une personne naturelle, qui doit signer le jeu de données électroniques (100) par voie électronique au moyen de l'unité de création de signature (111),
d) produire un jeu de données biométriques électroniques à partir de la au moins une caractéristique biométrique saisie dans l'unité de création de signature (111),
e) produire une valeur aléatoire d'opération de saisie de signature (106) dans l'unité de création de signature (111),
f) coder le jeu de données biométriques produit dans l'unité de création de signature (111) en utilisant la valeur aléatoire d'opération de saisie de signature produite (106),
g) transférer les données biométriques codées au dispositif de traitement de données (109), former un premier total de contrôle (115) via les données biométriques codées et le jeu de données électroniques (100) dans le dispositif de traitement de données (109) et transférer le premier total de contrôle formé (115) du dispositif de traitement de données (109) à l'unité de création de signature (111),
ou
transférer le jeu de données électroniques (100) du dispositif de traitement de données (109) à l'unité de création de signature (111)
et former un premier total de contrôle (115) via les données biométriques codées et le jeu de données électroniques (100) dans l'unité de création de signature (111),
h) coder la valeur aléatoire de l'opération de saisie de signature produite (106) dans l'unité de création de signature (111) en utilisant le premier total de contrôle (115),
i) coder le résultat provenant de l'étape de procédé h) en utilisant le premier code (107 ; 122, 123) mémorisé dans l'unité de création de signature (111), et
j) transférer le résultat du codage selon l'étape de procédé i) au dispositif de traitement de données (109) et, au cas où cela ne se fait pas encore dans l'étape de procédé g), transférer les données biométriques codées au dispositif de traitement de données (109).

2. Procédé selon la revendication 1, dans lequel les étapes de procédé h) - j) sont modifiées comme suit :
h) coder le premier total de contrôle (115) dans l'unité de création de signature (111) en utilisant la valeur aléatoire de l'opération de saisie de signature produite (106),
i) coder la valeur aléatoire de l'opération de saisie de signature (106) en utilisant le premier code (107 ; 122, 123) mémorisé dans l'unité de création de signature (111) et
j) transférer le résultat des codages selon les étapes de procédé h) et i) au dispositif de traitement de données (109) et, au cas où cela ne se fait pas encore à l'étape de procédé g), transférer les données biométriques codées au dispositif de traitement de données (109).

3. Procédé selon l'une quelconque des revendications précédentes, dans lequel :
dans la mémoire non lisible de l'unité de création de signature (111) est mémorisé un deuxième code et
le codage se fait selon l'étape f) en utilisant une combinaison de la valeur aléatoire de l'opération de saisie de signature (106) et du deuxième code mémorisé.

4. Procédé selon la revendication 3, comprenant d'autres étapes de procédé suivantes :
production unique ou périodique du deuxième code dans l'unité de création de signature (111) et
mémorisation du deuxième code produit dans la mémoire non lisible de l'unité de création de signature (111).

5. Procédé selon l'une quelconque des revendications 1 à 4, dans lequel le premier code (122, 123) mémorisé dans le dispositif de saisie de signature (111) est un code asymétrique d'une première paire de codes asymétriques (101).

6. Procédé selon l'une quelconque des revendications 1 à 4, dans lequel le premier code (107) mémorisé dans le dispositif de saisie de signature (111) est un code symétrique.

7. Procédé selon la revendication 6, dans lequel :
un code asymétrique (122, 123) d'une première paire de codes asymétriques (101) est mémorisé dans la mémoire de l'unité de création de signature (111),
l'unité de création de signature (111) est conçue de manière à réaliser un processus de codage asymétrique en utilisant ce code asymétrique (122, 123) et conçue pour générer de manière unique ou périodique ou sur demande le premier code (107) et le coder avec le code asymétrique (122, 123) de la première paire de codes asymétriques (101) en mémorisant le résultat de ce codage asymétrique de manière lisible dans l'unité de création de signature (111) et en le transférant à chaque opération de saisie de signature conjointement avec d'autres données au dispositif de traitement de données (109) et
le premier code (107) est un code secret qui est mémorisé de manière à ne pas pouvoir être lu en dehors de l'unité de création de signature (111) et n'est pas codé dans la mémoire de l'unité de création de signature (111).

8. Procédé selon l'une quelconque des revendications précédentes, dans lequel :
la formation du premier total de contrôle (115) est réalisée dans l'unité de création de signature (111) et le premier total de contrôle se limite à un contenu représentable (112) du jeu de données électroniques (100), qui peut être affiché sur un dispositif d'affichage (113) de l'unité de création de signature (111) et
ce contenu représentable (112) est mémorisé conjointement avec ou dans le jeu de données électroniques à partir duquel le contenu représentable a été produit, de sorte que ce contenu représentable puisse être éventuellement à nouveau représenté pour comparaison et qu'une formation de total de contrôle puisse à nouveau se faire en la matière.

9. Unité de création de signature (111) comprenant :
- une mémoire (112) non lisible en dehors de l'unité de création de signature (111), dans laquelle mémoire un code (107; 122, 123) est mémorisé,
- un dispositif de communication de données (116) qui est conformé pour effectuer une communication de données bidirectionnelle avec un dispositif de traitement de données séparé (109),
- un dispositif de codage (117) qui est conçu de manière à réaliser un processus de codage en utilisant le code (107; 122, 123) mémorisé dans l'unité de création de signature (111),
- un dispositif de saisie (118) qui est conçu de manière à saisir au moins une caractéristique biométrique d'une personne naturelle, qui doit signer le jeu de données électroniques (100) par voie électronique et à produire à partir de celui-ci un jeu de données biométriques électroniques,
- un dispositif de production de valeur aléatoire d'opération de saisie de signature (119),
- un dispositif de codage (117) qui est conçu pour coder le jeu de données biométriques produites en utilisant la valeur aléatoire produite (106) de l'opération de saisie de signature,
- un dispositif de formation de total de contrôle (120) qui est conçu pour former un total de contrôle (115) via les données biométriques codées et le jeu de données électroniques (100),
- un dispositif de codage (117) qui est conçu pour coder la valeur aléatoire (106) de l'opération de saisie de signature produite dans l'unité de création de signature (111) en utilisant le premier total de contrôle (115), et
- un dispositif de codage (117) qui est conçu pour coder la valeur aléatoire (106) de l'opération de saisie de signature codée en utilisant le premier total de contrôle (115) en utilisant le premier code (122, 123) mémorisé dans l'unité de création de signature (111).

10. Système informatique comprenant :
- un dispositif de traitement de données (109) qui est conçu pour établir une communication bidirectionnelle avec une unité de création de signature (111) et
- une unité de création de signature (111) spatialement séparée du dispositif de traitement de données (109) selon la revendication 9.

11. Programme informatique comprenant des instructions réalisables sur un système informatique (109, 111), lesquelles instructions font que le système informatique (109, 111) réalise un procédé selon une ou plusieurs des revendications 1 à 8.

12. Support lisible sur ordinateur avec des instructions qui y sont mémorisées et qui peuvent être réalisées à l'aide d'un processeur pour réaliser un procédé selon une ou plusieurs des revendications 1 à 8.
